(19) **Europäisches Patentamt**

**European Patent Office**

**Office européen des brevets**

(11) **EP 1 026 374 B1**

(12) **EUROPEAN PATENT SPECIFICATION**

(45) Date of publication and mention
of the grant of the patent:
**20.12.2006 Bulletin 2006/51**

(51) Int Cl.:
*F01N 3/20* (2006.01)     *F02D 41/14* (2006.01)
*F02D 41/40* (2006.01)    *F02D 41/02* (2006.01)

(21) Application number: **00101794.6**

(22) Date of filing: **28.01.2000**

(54) **Exhaust gas purifying apparatus of engine**

Vorrichtung zur Abgasreinigung für eine Brennkraftmaschine

Dispositif de purification de gaz d'échappement pour un moteur à combustion interne

(84) Designated Contracting States:
**DE ES FR GB IT**

(30) Priority: **08.02.1999 JP 2968799**

(43) Date of publication of application:
**09.08.2000 Bulletin 2000/32**

(73) Proprietor: **Mazda Motor Corporation**
Aki-gun,
Hiroshima (JP)

(72) Inventors:
• **Takami, Akihide,**
C/O Mazda Motor Corp.
**Aki-gun,**
**Hiroshima (JP)**
• **Kyogoku, Makoto,**
C/O Mazda Motor Corp.
**Aki-gun,**
**Hiroshima (JP)**
• **Yamada, Hiroshi,**
C/O Mazda Motor Corp.
**Aki-gun,**
**Hiroshima (JP)**
• **Okamoto, Kenji,**
C/O Mazda Motor Corp.
**Aki-gun,**
**Hiroshima (JP)**
• **Miyoshi, Seiji,**
C/O Mazda Motor Corp.
**Aki-gun,**
**Hiroshima (JP)**
• **Taga, Junichi,**
C/O Mazda Motor Corp.
**Aki-gun,**
**Hiroshima (JP)**
• **Yokota, Kazuya,**
C/O Mazda Motor Corp.
**Aki-gun,**
**Hiroshima (JP)**
• **Kuji, Yoichi,**
C/O Mazda Motor Corp.
**Aki-gun,**
**Hiroshima (JP)**
• **Kuroki, Masayuki,**
C/O Mazda Motor Corp.
**Aki-gun,**
**Hiroshima (JP)**

(74) Representative: **Laufhütte, Dieter et al**
**Lorenz-Seidler-Gossel**
**Widenmayerstrasse 23**
**80538 München (DE)**

(56) References cited:
**EP-A- 0 767 303          EP-A- 0 892 159**

• **PATENT ABSTRACTS OF JAPAN vol. 015, no. 463 (M-1183), 25 November 1991 (1991-11-25) & JP 03 199640 A (MAZDA MOTOR CORP), 30 August 1991 (1991-08-30)**
• **PATENT ABSTRACTS OF JAPAN vol. 1999, no. 01, 29 January 1999 (1999-01-29) & JP 10 266884 A (MITSUBISHI MOTORS CORP), 6 October 1998 (1998-10-06)**

**Description**

The present invention relates to an exhaust gas purifying apparatus of an engine, which can remove NOx from exhaust gas even if the air fuel ratio is lean, the apparatus having a NOx absorber disposed in the exhaust passage of the engine, the absorber being able to absorb nitrogen oxides (NOx) under an over-oxygen atmosphere. In particular, it relates to a technical field for reviving a catalyst to retrieve the efficiency of the NOx absorber, if the efficiency is decreased when the engine is working.

Conventionally, as the above-mentioned type of exhaust gas purifying apparatus of the engine, there has been known an apparatus having a NOx absorber, which is disposed in the exhaust passage of the engine, for absorbing NOx (nitrogen oxides) in the exhaust gas when the air fuel ratio of the air fuel mixture is lean and the oxygen concentration in the exhaust gas is high, while releasing NOx when the oxygen concentration is decreased, so that the released NOx is reduced to be purified (See, for example, Japanese Laid-open Patent Publication No. 7-139388 or Japanese Laid-open Patent Publication No. 9-133033.).

Meanwhile, the fuel or engine oil contains a very small amount of sulfur component (S). Thus, when the sulfur component is burnt and then discharged into the exhaust passage, the NOx absorber tends to absorb sulfur oxides (SOx) rather than NOx in the exhaust gas by nature. In addition, SOx which has been once absorbed, is hardly released even if the oxygen concentration in the exhaust gas is decreased. In consequence, there occurs such a problem of sulfur poisoning that the quantity of the absorbed SOx increases with the lapse of time so that the NOx absorption efficiency of the absorber is gradually lowered.

For the problem of sulfur poisoning described above, there has been proposed such a technique as to release the sulfur component by heating the NOx absorber, for example, as disclosed in Japanese Laid-open Patent Publication No. 8-61052. In the technique, the quantity of the sulfur component absorbed by the NOx absorber is estimated. Thus, the air fuel ratio of each of cylinders of the multiple cylinder engine is individually controlled in such a manner that when the quantity of the absorbed sulfur component becomes larger than a predetermined value, the fuel ratio of some cylinders is made rich while the air fuel ratio of the remaining cylinders is made lean. In consequence, the NOx absorber is heated up to a high temperature by burning the unburnt fuel discharged from the rich cylinders with the remaining oxygen discharged from the lean cylinders near the NOx absorber so that the absorbed sulfur component is burnt off (burnt to be removed).

However, in order to heat the NOx absorber to burn off the sulfur component as the above-mentioned technique (Japanese Laid-open Patent Publication No. 8-610525), it is required to heat the NOx absorber, for example, up to about 800 to 900 ° C. In consequence, there may be caused such a problem that the NOx absorber is thermally deteriorated. Therefore, the technique may not be actually a preferable procedure to solve the problem of sulfur poisoning.

On the other hand, the inventors of the present application have earnestly studied the problem of sulfur poisoning, and have found such a fact that SOx may be released from the NOx absorber by decreasing the oxygen concentration of the exhaust gas and feeding a lot of reducer such as carbon mono oxide (CO) or the like to the NOx absorber, even if the temperature is comparatively lower (for example, 450 to 600 °C, Japanese Laid-open Patent Publication No. 11-107740). That is, because the NOx absorber including the problem of sulfur poisoning generally has a property to absorb CO or carbon dioxide ($CO_2$) as well as NOx or SOx and further has another property to absorb CO more easily in comparison with NOx or SOx, the release of SOx may be highly promoted by feeding a lot of CO.

However, although the release of SOx may be promoted by feeding CO as described above, the air fuel ratio must be controlled so as to become equal to or richer than the theoretical air fuel ratio during the SOx releasing process in order to lower the oxygen concentration in the exhaust gas. In consequence, if it is intended to release the absorbed SOx sufficiently so as to revive the NOx absorber, extra fuel may be consumed only to revive it. That is, if it is intended to revive the NOx absorber sufficiently, deterioration of the fuel consumption may be caused. On the other hand, if it is intended to restrain the deterioration of the fuel consumption, there may occur such a disadvantage that the NOx absorber is revived insufficiently.

Moreover, apart from the problem of sulfur poisoning described above, when NOx is released from the NOx absorber, the released NOx is generally caused to react with the reducer such as CO, HC or the like in the exhaust gas, while making the air fuel ratio in the combustion chamber become richer than the theoretical air fuel ratio. On that occasion, the NOx concentration in the exhaust gas is well-balanced with the reducer concentration in the exhaust gas when the releasing rate of NOx is higher. However, as the release of the NOx from the NOx absorber progresses, the releasing rate of the NOx is decreased. Thus, there newly occurs such an evil that the above-mentioned HC, CO or the like is simply discharged into the atmosphere. Therefore, in order to prevent the evil, it may be obliged to return the air fuel ratio to the lean region when the releasing rate of the NOx decreases to a certain extent. In consequence, there may occur such a disadvantage that the revival of the NOx absorber may be completed in an insufficient condition.

In the European Patent Application EP 0892159 an exhaust gas purifying apparatus of an engine is described with a NOx absorber which absorbs NOx in an exhaust gas under an over-oxygen atmosphere in which an oxygen concentration in the exhaust gas is high while the absorbed NOx sensor oxygen concentration is decreased, and further absorbs a sulfur component in the exhaust gas. The NOx absorber is disposed in an exhaust passage into which the exhaust gas is discharged from a combustion chamber of the engine. The EP 0892159 A also teaches an SOx absorbent which absorbs SOx contained in the exhaust gas and releases SOx absorbed in the reducing atmospheric exhaust gas are arranged in the exhaust pass, whereby purifying the exhaust gas is enabled while preventing or subpressing SOx-poisoning of the NOx chemisorption reduction catalyst.

The present invention has been achieved in view of the above-mentioned problems. Thus, an object of the invention is to devise the procedure for reviving the NOx absorber disposed in the exhaust passage and further to revive the NOx absorber sufficiently while retraining the evils such as deterioration of the fuel consumption or the like to the minimum, so as to secure the NOx removal efficiency stably.

The above referenced object has been solved by an exhaust gas purifying apparatus of an engine according to the combination of features of claim 1. Preferred embodiments of the invention are disclosed in the dependent subclaims. The combination of features of claim 7 is also a solution of the above referenced object.

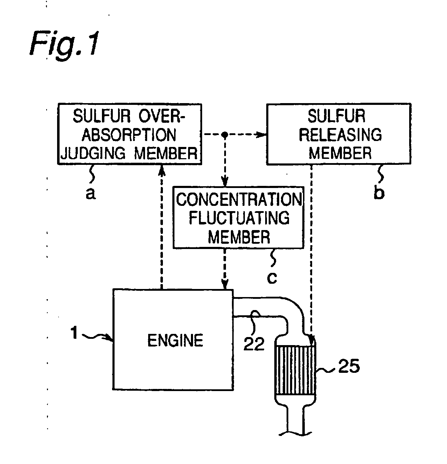

Concretely, as shown in Fig. 1, the apparatus according to the first aspect of the present invention includes a NOx absorber 25 for absorbing a sulfur component and NOx in the exhaust gas under an over-oxygen atmosphere in which the oxygen concentration in the exhaust gas is higher, while releasing the absorbed NOx when the oxygen concentration is decreased, the absorber being disposed in an exhaust passage 22 of an engine 1. Further, the apparatus includes a sulfur over-absorption judging member (a) for judging whether the sulfur component is excessively absorbed by the NOx absorber 25. Moreover, the apparatus includes a sulfur releasing member (b) for releasing the sulfur component from the NOx absorber 25 when the sulfur over-absorption judging member (a) has judged that the sulfur component is excessively absorbed. In addition, the apparatus includes a concentration fluctuating member (c) for periodically fluctuating at least one of the oxygen concentration and reducer concentration in the exhaust gas when the sulfur component is released from the NOx absorber 25 by the sulfur releasing member (b).

According to the construction of the above-mentioned apparatus, if the sulfur over-absorption judging member (a) has judged that the sulfur component is excessively absorbed by the NOx absorber 25 when the engine 1 is working, the sulfur component (SOx) is released from the NOx absorber 25 by the sulfur releasing member (b). On that occasion, because at least one of the concentrations of oxygen and reducer such as CO or HC in the exhaust gas is periodically fluctuated by the concentration fluctuating member (c), the partial pressure of oxygen or partial pressure of the reducer around the NOx absorber (25) is fluctuated. Further, because the influence of CO etc. for the NOx absorber 25 is intensified in comparison with such a state that the partial pressure is nearly constant, the release of SOx is promoted. In consequence, the time required for releasing SOx from the NOx absorber 25 is shortened, thereby the NOx absorber 25 is sufficiently revived while restraining deterioration of the fuel consumption to the minimum so that the NOx removal efficiency may be stably secured.

In the apparatus according to the second aspect of the present invention, the sulfur releasing member keeps the NOx absorber at a temperature equal to or higher than a predetermined temperature. In consequence, the NOx absorber is held at the temperature equal to or higher than the predetermined temperature (for example, 450 °C) so that the release of SOx may be promoted.

In the apparatus according to the third aspect of the present invention, the sulfur releasing member keeps the circumstance around at least the NOx absorber in such a state that the reducer concentration in the exhaust gas is higher. In consequence, a lot of reducer such as CO, HC etc. is fed to the NOx absorber so that the reaction between the reducer and SOx progresses. Therefore, the release of SOx from the NOx absorber may be promoted.

In the fourth aspect of the present invention, the apparatus includes a fuel injector for directly injecting a fuel into a combustion chamber in a cylinder of the engine. Further, the sulfur releasing member causes the fuel injector to divide the fuel into at least two parts so as to inject the parts by turns during a period from an intake stroke to a compression stroke of the cylinder, when the sulfur component is released from the NOx absorber.

According to the apparatus, the fuel is divided into at least two parts and individually injected by the fuel injector. Therefore, the part injected at first diffuses uniformly in the combustion chamber to form a lean air fuel mixture. Then, the other part of mist state injected later forms an excessively rich air fuel mixture. Thus, in the region of the excessively rich air fuel mixture, there is formed such a state that CO is easily produced due to a local incomplete combustion because of the lack of oxygen, although the initial combustion rate is fast just after the ignition. Meanwhile, the combustion rate in the region of the lean air fuel mixture around the rich region becomes slow. Thus, CO is produced more easily and the temperature of the exhaust gas is elevated due to after-burning, because a part of the fuel is discharged before it is completely burnt. Further, if the frequency of the opening operation of the fuel injector by one combustion cycle of the cylinder increases, the ratio of rough fuel drops with larger particle sizes increases, the drops being injected at earlier stage of the opening operation of the fuel injector. Therefore, vaporization or atomization of the fuel is deteriorated, and thereby CO may be also easily produced.

That is, because the concentration of CO in the exhaust gas is increased and further the temperature of the exhaust gas is elevated by the divisional fuel injection, the release of SOx from the NOx absorber may be promoted.

In the apparatus according to the fifth aspect of the present invention, the sulfur releasing member which is basically as same as that of the fourth aspect, increasingly corrects a fuel injection quantity of the fuel injector when the sulfur component is released from the NOx absorber. Thus, because the air fuel ratio in the combustion chamber is changed to a rich side by increasing the fuel injection quantity, the concentration of the reducer in the exhaust gas is increased so that the release of the sulfur component from the NOx absorber may be further promoted.

In the sixth aspect of the present invention, the apparatus includes an air fuel ratio controller for controlling the air fuel ratio defined as a ratio of air fed into the engine to the fuel fed into the engine. Further, the concentration fluctuating member controls the air fuel ratio in the combustion chamber of the engine so that the air fuel ratio is periodically fluctuated near the theoretical air fuel ratio. Thus, because the air fuel ratio in the combustion chamber is controlled so as to be periodically fluctuated near the theoretical air fuel ratio, the concentration of the reducer or oxygen in the exhaust gas may be periodically fluctuated.

In the seventh aspect of the present invention, the apparatus which is basically as same as that of the sixth aspect, includes an oxygen concentration detector for detecting the oxygen concentration in the exhaust gas. Further, the concentration fluctuating member controls the air fuel ratio in the combustion chamber by feedback control in accordance with a signal from the oxygen concentration detector so that the air fuel ratio is mutually fluctuated between a rich side and a lean side in relation to the theoretical air fuel ratio. Thus, in the apparatus, the concentration of the reducer or oxygen in the exhaust gas may be precisely controlled. Moreover, because a so-called lambda $O_2$ sensor can be used as the oxygen concentration detector, the accuracy of the air fuel ratio control may be improved so that the fuel consumption may be lowered.

In the apparatus according to the eighth aspect of the present invention, the concentration fluctuating member which is basically as same as that of the sixth aspect, controls the air fuel ratio in the combustion chamber by feed forward control so that the air fuel ratio is mutually fluctuated between a rich side and a lean side in relation to the theoretical air fuel ratio. That is, the concentration of the reducer or oxygen in the exhaust gas can be periodically fluctuated by means of, for example, a so-called dither control in which the target value of the air fuel ratio is periodically changed. Moreover, the target value of the air fuel ratio may be set to a value except the theoretical air fuel ratio. Therefore, if the target value is set to such a value that the average of the target value becomes leaner than the theoretical air fuel ratio, the fuel consumption may be lowered.

In the second means for solving the problems according to the present invention, a reducer in an exhaust gas is adsorbed by an adsorbent including zeolite disposed near a NOx absorber so that the reducer is reacted with the NOx without loosing the reducer into the atmosphere.

Concretely, the apparatus according to the ninth aspect of the present invention includes a NOx absorber for absorbing NOx in an exhaust gas under an over-oxygen atmosphere in which an oxygen concentration in the exhaust gas is higher, while releasing the absorbed NOx when the oxygen concentration is decreased, the absorber being disposed in an exhaust passage of the engine. Further, the apparatus includes a NOx over-absorption judging member for judging whether the NOx is excessively absorbed by the NOx absorber. Moreover, the apparatus includes an oxygen decreasing member for decreasing the oxygen concentration in the exhaust gas into a range between approximately 0.5% and approximately 1% when the NOx over-absorption judging member has judged that the NOx is excessively absorbed. Hereupon, an adsorbent including zeolite is disposed in, at least one of a vicinity of the NOx absorber and an upstream portion of the exhaust passage in relation to the NOx absorber.

According to the construction of the above-mentioned apparatus, if the NOx over-absorption judging member has judged that NOx is excessively absorbed by the NOx absorber when the engine is working, the oxygen concentration in the exhaust gas is decreased by the oxygen decreasing member. In consequence, NOx is released from the NOx absorber so that the released NOx reacts on the reducer in the exhaust gas so as to be reduced and purified. On the occasion, because the adsorbent including zeolite is disposed in at least one of the vicinity of the NOx absorber and the upstream portion of the exhaust passage so that the reducer such as CO, HC etc. in the exhaust gas is adsorbed and held by the adsorbent, the reducer is not simply discharged into the atmosphere so that NOx released from the NOx absorber may be reduced and purified almost wholly. That is, because NOx absorbed by the NOx absorber can be released almost wholly, the NOx absorber may be sufficiently revived so that the NOx removal efficiency may be stably secured.

Further, the oxygen concentration in the exhaust gas is decreased into a range between approximately 0.5% and approximately 1% by the oxygen decreasing member. Hereupon, in order to hold the oxygen concentration of the exhaust gas within the range between approximately 0.5% and approximately 1%, it may be sufficient to control the air fuel ratio A/F in the combustion chamber so as to become approximately 15 to 16. Therefore, the fuel consumption may be more reduced in comparison with such a case that the air fuel ratio is controlled so as to become the theoretical air fuel ratio (A/F=14.7).

Meanwhile, even if the oxygen concentration of the exhaust gas is held within the above-mentioned range, the reducer may be adsorbed and held by the adsorbent near the NOx absorber. Therefore, the NOx absorber may be revived as same as the case that the air fuel ratio is controlled so as to coincide with the theoretical air fuel ratio. In consequence, the NOx absorber may be sufficiently revived while retraining deterioration of the fuel consumption.

In the apparatus according to the tenth aspect of the present invention, the adsorbent which is basically as same as that of the ninth aspect, includes a catalytic metal. As the catalytic metal, it is preferable to use a noble metal, for example, such as platinum (Pt), rhodium (Rh), palladium (Pd), iridium (Ir) or the like. Thus, because NOx can be effectively reduced and decomposed even in a state of comparatively lower temperature by using the adsorbent including the catalytic metal, the NOx removal ratio may be improved.

In the eleventh aspect of the present invention, the apparatus which is basically as same as that of the ninth aspect, includes an exhaust gas returning member for returning a part of the exhaust gas from the exhaust passage to an intake system when the oxygen concentration in the exhaust gas is decreased by the oxygen decreasing member. That is, in general, if the air fuel ratio A/F in the combustion chamber is controlled so as to become 15 to 16, the quantity of NOx which is produced due to combustion of the fuel, tends to increase. However, in the apparatus, the quantity of NOx which is produced due to combustion of the fuel, may be restrained by returning the exhaust gas.

In the twelfth aspect of the present invention, the apparatus which is basically as same as that of the ninth aspect, includes a concentration fluctuating member for periodically fluctuating at least one of the oxygen concentration and reducer concentration in the exhaust gas when the oxygen concentration in the exhaust gas is decreased by the oxygen decreasing member. In consequence, as same as the case of the first aspect, by periodically fluctuating the concentration of oxygen and/or reducer such as CO or HC in the exhaust gas near the NOx absorber, the influence of CO, HC etc. is intensified so that the release of NOx may be promoted.

BRIEF DESCRIPTION OF THE DRAWINGS

Various characteristics and advantages of the present invention will be further described in details by the following preferred embodiments, referring now to attached drawings, wherein like reference characters designate like or corresponding parts throughout.

Fig. 1 is a schematic view showing the fundamental construction of the present invention.

Fig. 2 is a rough constructive view of an exhaust gas purifying apparatus of the engine according to the embodiment of the present invention.

Fig. 3 is a graph showing an output property of an $O_2$ sensor in relation to the change of air fuel ratio of the engine.

Fig. 4 is a sectional view showing a rough construction of a catalyst.

Fig. 5 is a view showing an example of the map in which some operating regions of the engine are set, the map including a region of stratiform combustion mode, a region of $\lambda=1$ division mode and a region of enrich mode.

Fig. 6 is a timing chart showing the timing of fuel injection in each of the operating regions of the engine.

Fig. 7A is a view showing an example of the map for setting the target engine torque corresponding to the engine speed and the accel openness.

Fig. 7B is a view showing an example of the map for setting the openness of the throttle valve corresponding to the engine speed and the target torque.

Fig. 8 is a flowchart showing a procedure for setting the fuel injection timing and the base fuel injection quantity.

Fig. 9 is a flowchart showing a procedure for controlling the release of NOx.

Fig. 10 is a flowchart showing a procedure for controlling the release of SOx.

Fig. 11 is a flowchart showing a procedure for performing the fuel injections in the intake and compression strokes.

Fig. 12 is a flowchart showing a procedure for performing the EGR control.

Fig. 13 is a timing chart showing changes of the air fuel ratio when the NOx releasing control and SOx releasing control are performed during the time that the engine is working.

Fig. 14 is a flowchart showing a procedure for controlling the release of NOx, according to the second embodiment of the present invention.

Fig. 15 is a flowchart showing a procedure for controlling the release of SOx, according to the second embodiment of the present invention.

Fig. 16 is a timing chart showing changed of the air fuel ratio when the NOx releasing control and SOx releasing control are performed during the time that the engine is working, according to the second embodiment of the present invention.

Figs. 17A and 17B are graphs, each of which shows the fact that the NOx removal efficiency is improved by periodically fluctuating the air fuel ratio when NOx is released and reduced.

DETAILED DESCRIPTION OF THE PREFERRED EMBODIMENTS

Hereinafter, some embodiments of the present invention will be described.

(First embodiment)

(General construction of the engine)

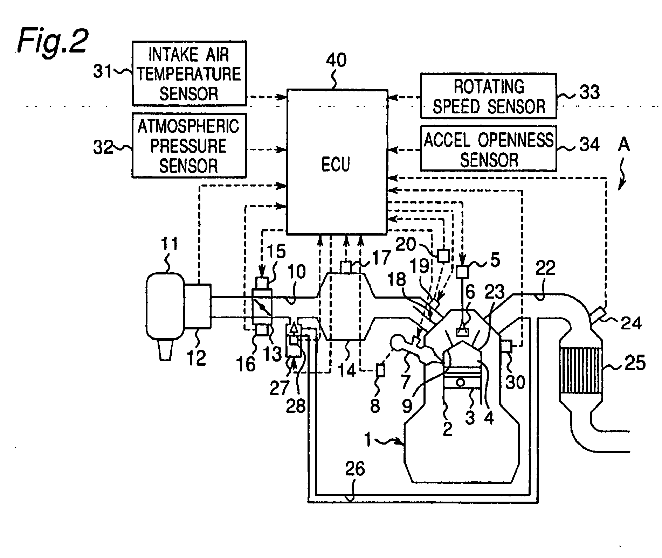

Fig. 2 shows a general construction of an engine provided with an exhaust gas purifying apparatus A according to the first embodiment of the present invention. In Fig. 2, the numeral 1 denotes the engine of multicylinder type, for example, which is mounted on a vehicle. The engine 1 has a plurality of cylinders 2, 2 ··· (only one of them being shown) . In each of the cylinders 2, there is inserted a piston 3 which can reciprocate in the cylinder 2. Thus, a combustion chamber 4 is defined in the cylinder 2 by the piston 3. At the position which corresponds to the center axis of the cylinder 2, in the upper wall of the combustion chamber 4, an ignition plug 6 connected to an ignition circuit 5 is mounted so as to face the combustion chamber 4. Further, in the peripheral portion of the combustion chamber 4, there is disposed a injector 7 (fuel injection valve) for directly injecting and feeding the fuel into the combustion chamber 4.

The injector 7 is connected to a fuel feeding circuit including a high pressure fuel pump, a pressure regulator and so on, although they are not shown in Fig. 2. Thus, the fuel feeding circuit feeds the fuel in a fuel tank to the injector 7 while adequately adjusting the fuel pressure. Further, a fuel pressure sensor 8 for detecting the fuel pressure is provided. Hereupon, if the fuel is injected by the injector 7 during the latter period within the compression stroke of the cylinder 2, the fuel mist is trapped by a concave cavity (not shown) formed on the upper surface of the piston 3. Thus, a layer of comparatively rich air fuel mixture is formed near the ignition plug 6. On the other hand, if the fuel is injected by the injector 7 during the intake stroke of the cylinder 2, the fuel mist diffuses in the combustion chamber 4 so as to be mixed with the intake air. Thus, a uniform air fuel mixture is formed in the combustion chamber 4.

The combustion chamber 4 is communicated with an intake passage 10 through a not shown intake port to which an intake valve 9 is disposed. The intake passage 10 feeds the intake air filtrated by an air cleaner 11 into the combustion chamber 4 of the engine 1. From the upstream position to the downstream position in the intake passage 10, by turns, there are disposed an air flow sensor 12 of hot wire type for detecting the quantity of the intake air drawn into the engine 1, a throttle valve 13 of electrical type for throttling the intake passage 10, and a surge tank 14. The throttle valve 13 of electrical type is not mechanically linked with an accel pedal (not shown). It is actuated by a motor 15 so as to be opened or closed. Further, there are provided a throttle openness sensor 16 for detecting the openness of the throttle valve 13, and an intake pressure sensor 17 for detecting the intake air pressure in the surge tank 14.

In the downstream position in relation to the surge tank 14, the intake passage 10 is branched to some independent passages, each of which is used for the corresponding cylinder 2. Further, the downstream end portion of each of the independent passages is divided into two branch passages, each of which is communicated with the corresponding intake port. Thus, a swirl control valve 18 is disposed in one of the two branch passages. The swirl control valve 18 is actuated by an actuator 19 so as to be opened or closed. Hereupon, when the swirl control valve 18 in one branch passage is closed, the intake air is fed to the combustion chamber 4 only through the other branch passage so that a strong swirl of the intake air is caused in the combustion chamber 4. On the other hand, as the openness of the swirl control valve 18 becomes larger, the swirl of the intake air is weakened. Moreover, there is provided a swirl control valve openness sensor 20 for detecting the openness of the swirl control valve 18.

In Fig. 2, the numeral 22 denotes an exhaust passage for discharging the combustion gas from the combustion chamber 4. The upstream end portion of the exhaust passage 22 is branched to some branch passages, each of which is used for the corresponding cylinder 2. Each of the branch passages is communicated with the combustion chamber 4 through a not shown exhaust port to which an exhaust valve 23 is disposed. From the upstream position to the downstream position in the exhaust passage 22, by turns, there are disposed an $O_2$ sensor 24 for detecting the oxygen concentration in the exhaust gas, and a catalyst 25 for purifying the exhaust gas.

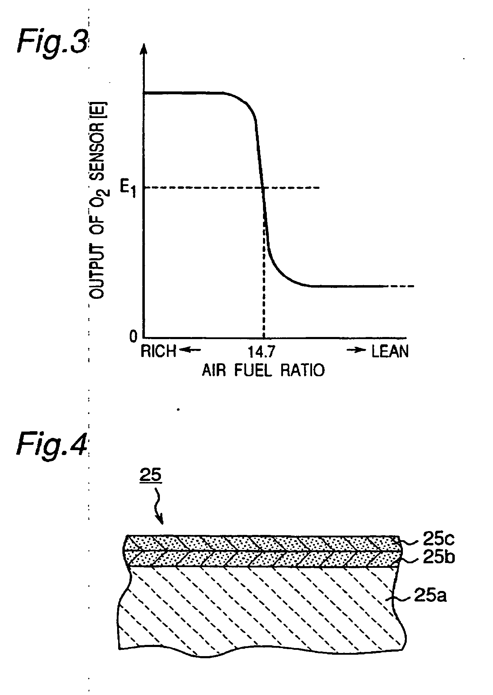

As shown in Fig. 3, the output E (electric motive force) of the $O_2$ sensor 24 becomes a standard value $E_1$ when the oxygen concentration in the exhaust gas is the concentration nearly corresponding to the theoretical air fuel ratio (about 0.5%). Meanwhile, the output E rapidly increases when the air fuel ratio is richer than that, while the output E rapidly decreases when the air fuel ratio is leaner than that. That is, the $O_2$ sensor 24 is a so-called lambda $O_2$ sensor, whose output is stepwise reversed in accordance with whether the air fuel ratio is richer or leaner than the theoretical air fuel ratio.

Meanwhile, the catalyst 25 is a catalyst of NOx absorbing and reducing type, which absorbs NOx under the over-oxygen atmosphere in which the oxygen concentration in the exhaust gas is higher, while releasing the absorbed NOx to reduce and purify it when the oxygen concentration is lowered.

Concretely, as shown in Fig. 4, the catalyst 25 of lean NOx type has a carrier 25a of honeycomb structure, which is made of cordierite. Further, the catalyst 25 is provided with an inner catalytic layer 25b disposed on the wall surface of penetrating holes which are formed in the carrier 25a, and an outer catalytic layer 25c disposed on the inner catalytic layer 25b. Namely, the catalyst 25 has a two layer coating structure.

In the inner catalytic layer 25b, a noble metal such as platinum (Pt) etc. and barium (Ba) acting as a NOx absorber are supported by alumina and ceria acting as supporters, each of which is a porous material. On the other hand, in the outer catalytic layer 25c, platinum (Pt) and rhodium (Rh) acting as the catalytic metals and barium (Ba) are supported by zeolite acting as a supporter, which is a porous material.

Hereupon, instead of the above-mentioned barium, there may be used at least one of alkali earth metals except barium, alkali metals such as sodium (Na) etc., and rare earth metals. Further, zeolite may be used as the supporter in the inner catalytic layer 25b. In that case, alumina or ceria may be used as the supporter in the outer catalytic metals 25c. Moreover, as the catalyst 25, there may be used a catalyst of single layer coating type, which has a catalytic layer in which alumina and ceria acting as the supporters are supported on the wall surface of the carrier, and a noble metal such as platinum (Pt), rhodium (Rh), palladium (Pd) etc., alkali metals such as potassium (K) etc. and alkali earth metals such as barium (Ba) etc. are supported by the supporter, although it is not shown.

Further, the upstream end portion of an EGR passage 26 is connected to the upstream portion of the exhaust passage 22 in relation to the $O_2$ sensor 24. On the other hand, the downstream end portion of the EGR passage 26 is connected to the intake passage 10 at a position between the throttle valve 13 and the surge tank 14. In consequence, a part of the exhaust gas is returned to the intake system. Hereupon, an EGR valve 27 of electrical type, whose openness can be adjusted, is disposed in the EGR passage 26 at a position near its downstream end. In consequence, the quantity of the returned exhaust gas (Hereinafter, it will be referred to "EGR amount".), which passes through the EGR passage 26, may be adjusted. Thus, the exhaust gas returning member is composed of the EGR passage 26 and the EGR valve 27. Further, there is provided a lift sensor 28 for detecting the lifting quantity of the EGR valve 27.

Hereupon, a control unit 40 (Hereinafter, it will be referred to "ECU".) actuates or controls the ignition circuit 5 for the ignition plug 6, the injector 7, the driving motor 15 for the electrical throttle valve 13, the actuator 19 for the swirl control valve 18, the electrical EGR valve 27 and so on. Meanwhile, to the ECU 40, there are introduced output signals of the air flow sensor 12, the throttle openness sensor 16, the intake pressure sensor 17, the swirl control valve openness sensor 20, the $O_2$ sensor 24 and the lift sensor 28 for the EGR valve 27. In addition, to the ECU 40, there are also introduced output signals of a water temperature sensor 30 for detecting the temperature of cooling water of the engine 1 (engine water temperature), an intake air temperature sensor 31 for detecting the intake air temperature, an atmospheric pressure sensor 32 for detecting the atmospheric pressure, a rotating speed sensor 33 for detecting the engine speed (rotation) and an accel openness sensor 34 for detecting the openness of the accel pedal (accel operating variable).

(Outline of the engine control)

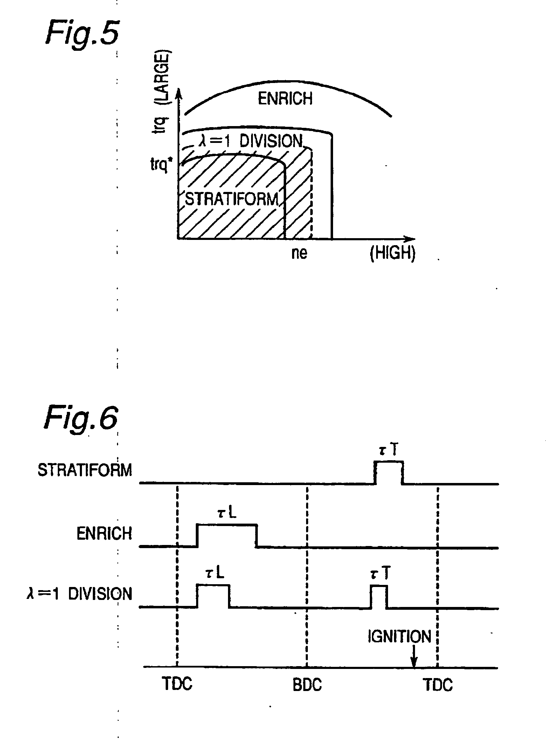

In the engine 1 according to the present embodiment, the condition of fuel injection (fuel injection timing, air fuel ratio and so on) by the injector 7 is changed in accordance with the working condition of the engine 1 so that the engine 1 works in different burning conditions. That is, for example, as shown in Fig. 5, when the engine 1 is in a warm state, a stratiform combustion region is set in a predetermined region of lower load and lower rotation. In the region, as shown in Fig. 6, the fuel is injected in one lot during the latter stage of the compression stroke by the injector 7. Thus, the engine 1 works in such a combustion mode that the fuel is burned in a stratiform condition in which the air fuel mixture locally exists only near the ignition plug 6. In the stratiform combustion mode, the openness of the throttle valve 13 is made larger in order to decrease the pumping loss of the engine 1. In consequence, the average air fuel ratio in the combustion chamber 4 becomes a highly lean state (for example, A/F= ca 30).

On the other hand, the working region except the stratiform combustion region is defined as a uniform combustion region. Thus, in a λ=1 division region which is set in a lower load area in the uniform combustion region, the injector 7 divides the fuel into two parts, and individually injects the two parts during the intake and compression strokes, respectively (Hereinafter, it will be referred to " λ=1 division mode".). Further, the fuel injection quantity and throttle openness etc. are controlled in such a manner that the air fuel ratio of the air fuel mixture in the combustion chamber 4 nearly coincides with the theoretical air fuel ratio (A/F=14.7). Meanwhile, in an enrich region which is set in a higher load or higher rotation area in the uniform combustion region, the fuel injector 7 injects the fuel in one lot during the former period in the intake stroke (Hereinafter, it will be referred to "enrich mode".). Further, the air fuel ratio is controlled so as to become a richer state than the theoretical air fuel ratio (for example, A/F=13-14).

Meanwhile, in the region with slanting lines in the control map shown in Fig. 5, the EGR valve 27 is opened so that a part of the exhaust gas is returned to the intake passage 10 through the EGR passage 26. Hereupon, when the engine 1 is in a cold state, all the working region of the engine 1 becomes the uniform combustion region in order to improve the burning stability, although it is not shown.

More particularly, in accordance with the working condition of the engine 1, the ECU 40 decides various control parameters relating to the engine output, for example, such as the quantity and timing of fuel injection of the injector 7, the intake air quantity adjusted by the throttle valve 13, the swirl intensity of intake air adjusted by the swirl control valve 18, the EGR quantity adjusted by the EGR valve 27, and so on.

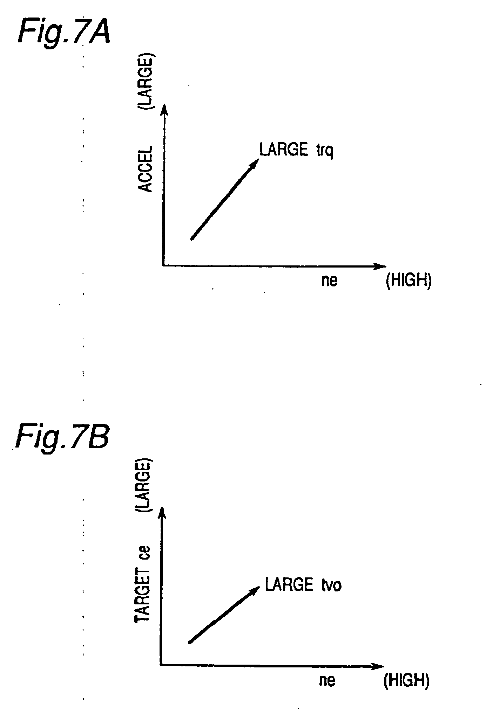

That is, at first, the target torque trq of the engine 1 is calculated on the basis of the accelerator openness accel and the engine speed ne. The relationship among the target torque trq, the accelerator openness accel and the engine speed ne is previously established so as to obtain the required output performance by a bench test or the like. Thus, the relationship is stored in a memory of the ECU 40 as a map. Then, a value corresponding to the actual accelerator openness accel and the engine speed ne is read out from the map. In Fig. 7A, there is shown an example of the relationship among the target torque trq, the accelerator openness accel and engine speed ne. In the example, the target torque trq increases as the accelerator openness accel becomes larger. In addition, the torque becomes larger as the engine speed ne becomes higher.

Following the above, the working mode is set in accordance with the engine speed ne and the target torque trq obtained as described above. That is, as shown in Fig. 5, for example, when the engine 1 is in a warm state, the stratiform combustion mode is set if the target torque trq is lower than a predetermined threshold value trq* of lower load side and the engine speed ne is lower. In the other working states, the uniform combustion mode is set. In this case, further, the λ=1 division mode or enrich mode is set in accordance with the engine speed ne and the target torque trq.

Then, a target air fuel ratio afw is set at every working mode. That is, in the stratiform combustion mode or enrich mode, the target air fuel ratio afw is established using the map which has been previously made, in accordance with the engine speed ne and the target torque trq. Meanwhile, in the λ =1 division mode, the target air fuel ratio afw is set to the theoretical air fuel ratio. Thus, a target charging efficiency ce is calculated in accordance with the target air fuel ratio afw, the engine speed ne and the target torque trq. Further, a throttle openness tvo is established using the map which has been previously made (see Fig. 7B) in accordance with the target charging efficiency ce and the engine speed ne. Hereupon, the relationship between the engine speed ne and the throttle openness tvo is changed in accordance with whether the EGR is performed or not. That is, when the EGR is performed, the throttle openness tvo is made larger in comparison with the case without the EGR.

Moreover, an actual charging efficiency ce of the engine 1 is calculated in accordance with the output signal of the air flow sensor 12. Then, a basic fuel injection quantity qbase is calculated in accordance with the actual charging efficiency ce and the target air fuel ratio afw.

$$\text{qbase} = \text{KGKF} \times \text{ce/afw} \quad (\text{KGKF is a conversion factor.})$$

In parallel with the above, a fuel division ratio between the injections of the intake and compression strokes is set at every working mode. Hereupon, in the stratiform combustion mode, the ratio of the fuel injected during the intake stroke is set to 0%. On the other hand, in the enrich mode, the ratio of the fuel injected during the intake stroke is set to 100%. Meanwhile, in the λ=1 division mode, the fuel division ratio is set in accordance with the target air fuel ratio afw and the engine speed ne.

Further, the fuel injection timing is set at every working mode. In the stratiform combustion mode, the fuel injection timing Inj_TT for the compression stroke injection is obtained using a map which has been previously made, in accordance with the target torque trq and the engine speed ne, although details are not shown. Meanwhile, in the uniform combustion mode, the fuel injection timing Inj_TL for the intake stroke injection is obtained using a table which has been previously made, in accordance with the engine speed ne. On the other hand, in the case of the divisional injection, the data in the stratiform combustion mode is diverted to the fuel injection timing Inj_TT for the compression stroke injection. Further, the fuel injection timing Inj_TL for the intake stroke injection is obtained using a map which has been previously made, in accordance with the target air fuel ratio afw and the engine speed ne.

In addition, the ignition timing of the engine 1 is set at every working mode. In the stratiform combustion mode, the basic ignition timing is obtained in accordance with the target torque trq and the engine speed ne. Meanwhile, in the λ =1 division mode or enrich mode, the basic ignition timing is obtained in accordance with the charging efficiency ce and the engine speed ne, and further the basic ignition timing is corrected in accordance with the engine water temperature and so on. Moreover, the swirl control valve 18 is also controlled at every working mode. In the stratiform combustion mode, the larger the target torque trq becomes or the higher the engine speed ne becomes, the larger the openness of the swirl control valve 18 is made. Meanwhile, in the λ=1 division mode or enrich mode, the larger the target torque trq becomes or the higher the engine speed ne becomes, the smaller the openness of the swirl control valve 18 is made. Hereupon, as will be described later in detail, the EGR quantity is also controlled at every working mode, in accordance with the working state of the engine 1.

(Fuel injection control for reviving catalyst)

In this embodiment, as described above, because the engine 1 works using the stratiform combustion in the lower load region, the fuel consumption is highly improved. In addition, the lean NOx catalyst 25 of so-called absorption and reduction type is used so as to be able to decrease NOx in the exhaust gas even if the air fuel ratio is extremely leaner as such a case of the stratiform combustion. Thus, when the quantity of NOx absorbed by the catalyst 25 becomes larger to a certain extent, the NOx is released so as to be reduced and purified, in order to make the catalyst 25 exhibit the purifying efficiency stably. Further, because a very small amount of SOx contained in the exhaust gas is gradually absorbed by barium, the quantity of SOx absorbed by the catalyst 25 gradually increases with the lapse of time. Hereupon, if the quantity increases to such an extent that the NOx removing efficiency is disturbed by SOx, the SOx is forcibly released from the catalyst 25.

Thus, the present invention is characterized in the following features. That is, when the catalyst 25 is revived by releasing NOx or SOx, the concentration of CO in the exhaust gas is highly increased by controlling the air fuel ratio in the combustion chamber 4 so as to nearly coincide with the theoretical air fuel ratio as same as the conventional case and further dividing the fuel injection of the fuel injector 7 into two parts. Moreover, the concentrations of CO and HC in the exhaust gas are periodically fluctuated by changing the air fuel ratio so as to mutually change to the richer side and leaner side.

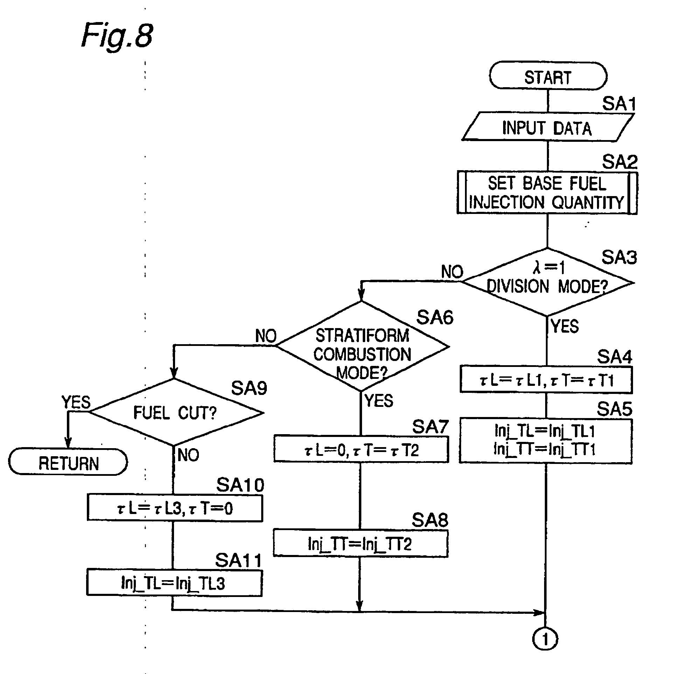

Hereinafter, in accordance with the flowcharts shown in Figs. 8 to 11, there will be described a concrete procedure of the fuel injection control including the control process for reviving the catalyst 25.

As shown in Fig. 8, at first in Step SA1 after the control has started, to the ECU 40, there are introduced various sensor signals of the air flow sensor 12, the $O_2$ sensor 24, the water temperature sensor 30, rotating speed sensor 33, the accel openness sensor 34 and so on. In addition, various data in the memory is also inputted to the ECU 40. Next, in Step SA2, the base fuel injection quantity qbase is calculated and set, in accordance with the charging efficiency ce, the target air fuel ratio afw and so on, as described above.

Following that, in Steps SA3 to SA11, there are obtained respective injection pulse width $\tau$ L, $\tau$ T and respective injection timing Inj_TL, Inj_TT of the intake stroke and the compression stroke, at every working mode. That is, at first in Step SA3, it is judged whether the engine 1 is working in the $\lambda$=1 division mode or not. If the judgement is NO, the control process is advanced to Step SA6. On the other hand, if the judgement is YES, the control process is advanced to Step SA4. In Step SA4, the base fuel injection quantity qbase is divided into the respective part for the intake and compression strokes in accordance with the fuel division ratio. Then, in accordance with the flowing property of the injector 7, the injection pulse width $\tau$ corresponding to each of the injection quantities is set. Namely, the intake stroke injection pulse width $\tau$ L and the compression stroke injection pulse width $\tau$ T are set to $\tau$ L1 and $\tau$ T1, respectively. Next, in Step SA5, the injection timing of each of the intake stroke injection and the compression stroke injection is set (Inj_ TL= Inj_TL1, Inj_TT= Inj_TT1).

Meanwhile, in Step SA6 to which the control process is advanced when it is judged that the engine 1 is not working in the $\lambda$=1 division mode in Step SA3 (NO), it is judged whether the engine 1 is working in the stratiform combustion mode or not. If the judgement is NO, the control process is advanced to Step SA9. On the other hand, if the judgement is YES, the control process is advanced to Step SA7. In Step SA7, the injection pulse width $\tau$ L of the intake stroke is set to 0, and further the injection pulse width $\tau$ T of the compression stroke is set to $\tau$ T2 which corresponds to the base fuel injection quantity qbase described above. Next, in Step SA8, the injection timing of the compression stroke injection is set (Inj_TT= Inj TT2). Meanwhile, in Step SA9 to which the control process is advanced when it is judged that the engine 1 is not working in the stratiform combustion mode in Step SA6 (NO), it is judged whether the fuel cut control is to be performed or not. If the judgement is YES, the control process is returned. On the other hand, if the judgement is NO, the control process is advanced to Step SA10. In Step SA10, the injection pulse width $\tau$ L of the intake stroke is set to $\tau$ L3 which corresponds to the base fuel injection quantity qbase described above, and further the injection pulse width $\tau$ T of the compression stroke is set to 0. Further, in Step SA11 following that, the injection timing of the intake stroke injection is set (Inj_TL= Inj TL3).

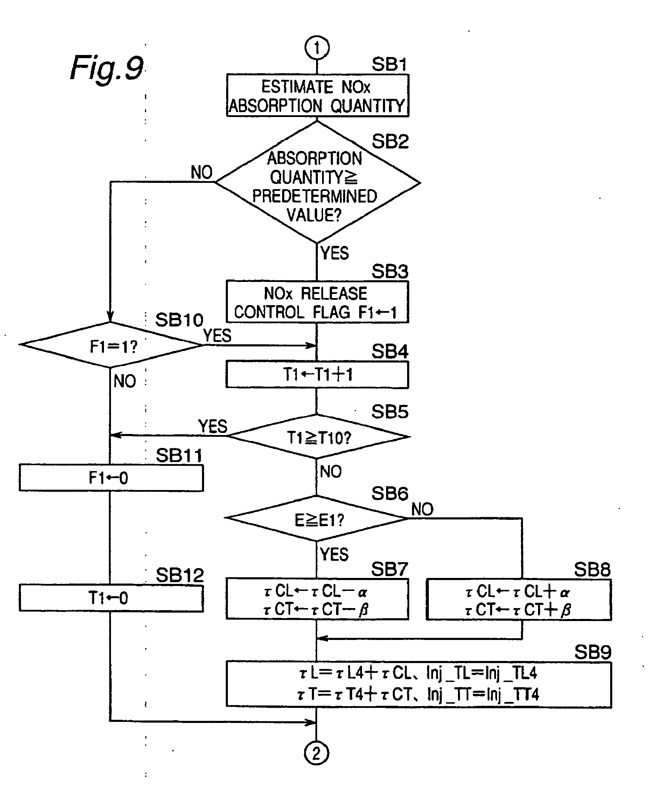

Following Step SA5, SA8 or SA11 in Fig. 8, in Step SB1 shown in Fig. 9, the quantity of NOx absorbed by the catalyst 25 (NOx absorption quantity) is estimated. The estimation is performed, for example, in accordance with the travel distance after the last control for promoting the release of NOx (NOx release control) has been performed, and the total quantity of the fuel consumed during the period for the travel. Based on the result estimated as the above, in Step SB2 following that, it is judged whether the NOx absorption quantity is larger than or equal to a predetermined value which has been previously set or not, namely whether NOx is excessively absorbed or not. If the judgement is NO, the control process is advanced to Step SB10. On the other hand, if the judgement is YES, the control process is advanced to Step SB3. In Step SB3, the first flag F1 which indicates whether it is the period for performing the NOx release control, is set to ON (F1=1). In Step SB2, the NOx release control may be performed as described later by regarding the judgment as YES regardless of the absorption quantity of NOx when the engine 1 is accelerated.

Next, in Step SB4, the first timer count T1 whose initial value is 0, is incremented (T1=T1+1). Then, in Step SB5 following that, it is judged whether the first timer count T1 is lager than or equal to a threshold value T10 which has been previously set, or not. If the judgement is YES, it is judged that the period for performing the NOx release control has been concluded, and then the control process is advanced to Steps SB11 and SB12. In Steps SB11 and SB12, the first flag F1 is cleared (F1=0) and the first timer count T1 is reset (T1=0), respectively. On the other hand, the judgement is NO, the control process is advanced to Step SB6. Thus, in Steps SB6 to SB9, the feedback control calculation is performed in accordance with the signal from the $O_2$ sensor 24.

Concretely, at first in Step SB6, the output E of the $O_2$ sensor 24 is compared with a standard value E1 corresponding to the theoretical air fuel ratio. If the output E is larger than or equal to the standard value E1 (YES), the control process is advanced to Step SB 7 so that the feedback correction values $\tau$ CL and $\tau$ CT are calculated. That is, the feedback correction values $\tau$ CL and $\tau$ CT of this time are calculated by subtracting constant values $\alpha$ and $\beta$ from the last $\tau$ CL and $\tau$ CT, respectively. On the other hand, if it is judged that the output E of the $O_2$ sensor 24 is smaller than the standard value E1 in Step SB6 (NO), the control is advanced to Step SB8. In Step SB8, the feedback correction values $\tau$ CL and $\tau$ CT of this time are calculated by adding the constant values $\alpha$ and $\beta$ to the last $\tau$ CL and $\tau$ CT, respectively.

Following that, in Step SB9, based on the injection pulse widths r L4 and $\tau$ T4 obtained in correspondence with the actual charging efficiency ce so that the air fuel ratio in the combustion chamber 4 coincides with the theoretical air fuel ratio, and based on the feedback correction values $\tau$ CL and $\tau$ CT obtained in Step SB7 or SB8, the injection pulse widths $\tau$ L and $\tau$ T of the intake stroke and compression stroke when the NOx release control is performed, are calculated, and further their injection timings are newly set.

$$\tau L = \tau L4 + \tau CL, \qquad Inj\_TL = Inj\_TL4$$

$$\tau T = \tau T4 + \tau CT, \qquad Inj\_TT = Inj\_TT4$$

That is, because the air fuel ratio is richer than the theoretical air fuel ratio when the output E of the $O_2$ sensor 24 is larger than the standard value E1, the fuel injection quantities in the intake and compression strokes are gradually decreased by the constant quantities $\alpha$ and $\beta$ at every control cycle so that the air fuel ratio is changed to the leaner side. Meanwhile, because the air fuel ratio is leaner this time when the output E is smaller than the standard value E1, the fuel injection quantities are gradually increased so that the air fuel ratio is changed to the richer side. Hereupon, although both of the injection quantities in the intake and compression strokes are corrected by the feedback control in Steps SB7 to SB9, only the injection quantity in the intake stroke may be corrected by the feedback control instead of the above. Because, deterioration of the combustion condition or exhaust gas is less even if the quantity of fuel injection in the intake stroke is changed.

Meanwhile, in Step SB10 to which the control process is advanced when the judgement in Step SB2 is NO, the state of the first flag F1 is judged. If the first flag F1 is ON (F1=1), it is judged that the NOx release control should be performed at present period so that the control process is advanced to Step SB4. On the other hand, if the first flag F1 is OFF (F1=0), it is judged that the NOx release control should not be performed at present period so that the control process is advanced to Steps SB11 and SB12.

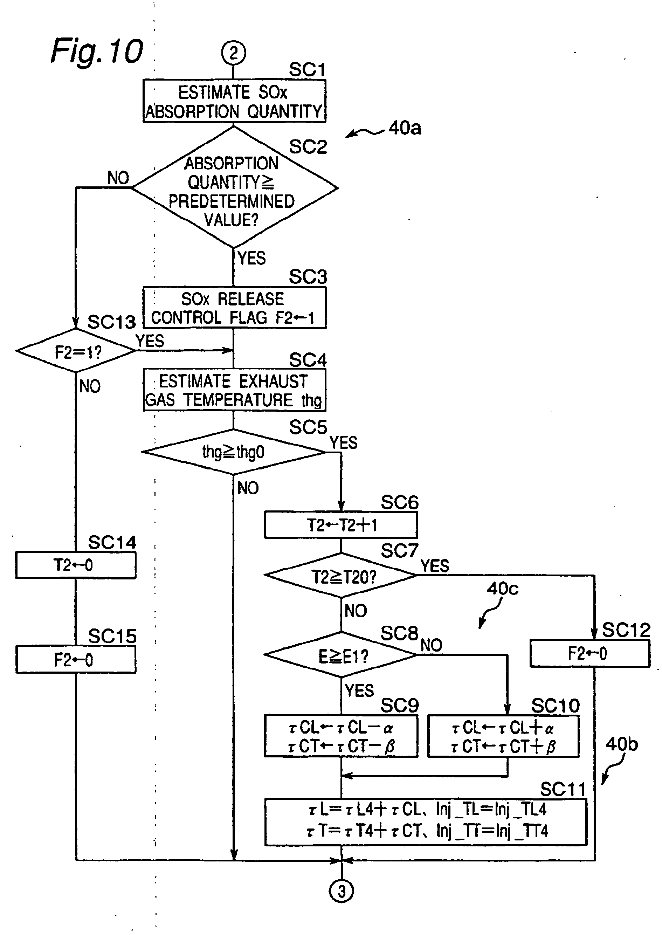

Following Step SB9 or SB12 in Fig. 9, in Step SC1 shown in Fig. 10, the degree of sulfur poisoning of the catalyst 25, namely the quantity of SOx absorbed by the catalyst 25 (SOx absorption quantity) is estimated this time. The estimation is performed, fundamentally as same as the case of the estimation of the NOx absorption quantity in Step SB1, in accordance with the travel distance after the last control for promoting the release of SOx (SOx release control) has been performed, and the total quantity of the fuel consumed during the period for the travel while considering the temperature of the catalyst 25 during the same period. Then, in the following Step SC2, based on the result of the estimation, it is judged whether the SOx absorption quantity is larger than or equal to a predetermined value which has been previously set, namely whether SOx is excessively absorbed or not. Hereupon, because the sulfur content in the exhaust gas is very small, in general, the travel distance for causing the SOx over-absorption is much longer than the travel distance for causing the NOx over-absorption.

If the judgement in Step SC2 is NO, the control process is advanced to Step SC13. On the other hand, if the judgement is YES, the control process is advanced to Step SC3. In Step SC3, the second flag F2, which indicates whether it is the period to perform the SOx release control at present, is set to ON (F2=1). Then, in Step SC4, the exhaust gas temperature thg, namely the temperature of the catalyst 25 is estimated. The estimation is performed based on mainly the actual charging efficiency ce and the engine speed ne when the estimation is performed, while considering the time that the engine 1 has worked in the stratiform combustion mode or the time that the divisional injection has been performed, during a predetermined period before the estimation. Hereupon, the exhaust gas temperature thg tends to become higher as the charging efficiency or engine speed becomes higher, and further tends to become higher when the divisional injection is performed. Meanwhile, because the exhaust gas temperature thg becomes considerably lower in the stratiform combustion mode, the temperature of the catalyst 25 becomes lower as the working time by the stratiform combustion mode becomes longer.

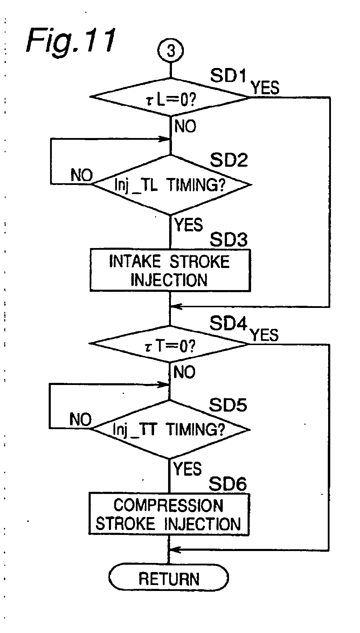

Following that, in Step SC5, it is judged whether the exhaust gas temperature thg is higher than or equal to a preset temperature thg0 (for example, 450 °C) or not. If the judgement is NO, the control process is advanced to Step SD1 in Fig. 11. On the other hand, if the judgement is YES, the control process is advanced to Step SC6 so that the SOx release control is performed. The reason why the SOx release control is performed only when the exhaust gas temperature is higher to a certain extent, is as follows. That is, if the temperature of the catalyst 25 has not become higher to a certain extent, it is impossible to release SOx from the catalyst 25.

In Step SC6 just after Step SC5, the second timer count T2 whose initial value is 0, is incremented (T2=T2+1). Then, in Step SC7, it is judged whether the second timer count T2 is larger than or equal to a threshold value T20 which has been previously set, or not. When the judgement is NO, the control process is advanced to Step SC8. Then, in Steps SC8 to SC11, the feedback control calculation is performed on the basis of the signals from the $O_2$ sensor 24. Hereupon, because the concrete procedure of the calculation of the feedback control is as same as that of Steps SB6 to SB9 in Fig. 9, the explanation about the procedure is omitted. Then, if the time corresponding to the threshold value T20 has passed so that SOx has been sufficiently released from the catalyst 25, the judgement in Step SC7 becomes YES so that the control process is advanced to Step SC12. In Step SC12, the second flag F2 is cleared (F2=0), and then the control process is advanced to Step SD1 in Fig. 11.

Meanwhile, in Step SC13 to which the control process is advanced when the judgement in Step SC2 is NO, the state of the second flag F2 is judged. If the second flag F2 is ON (F2=1), it is judged that the SOx release control should be performed at the present period so that the control process is advanced to Step SC4. On the other hand, If the second flag F2 is OFF (F2=0), it is judged that the SOx release control should not be performed at the present period so that the control process is advanced to Steps SC14 and SC15. In Steps SC14 and SC15, the second timer count T2 is reset (T2=0), and the second flag F2 is cleared (F2=0), respectively. Then, the control process is advanced to Step SD1 in Fig. 11.

After Step SC5, SC 11, SC12 or SC15 has performed, in Step SD1 in Fig. 11, at first it is judged whether the injection pulse width $\tau$ L of the intake stroke is zero or not. If the pulse width $\tau$ L is zero ($\tau$ L=0), namely the judgement is YES, the control process is advanced to Step SD4. On the other hand, if the pulse width $\tau$ L is not zero, namely the judgement is NO, the control process is advanced to Step SD2. In Step SD2, it is judged whether the present time point is the injection timing Inj_TL of the intake stroke or not. Then, if it becomes the injection timing after waiting for some time (judged as YES in Step SD2), the control process is advanced to Step SD3. In Step SD3, the fuel injection of the intake stroke is performed by means of the injector 7. Following that, in Steps SD4 to SD6, the fuel injection of the compression stroke is performed as same as the above-mentioned case, and then the control process is returned.

Hereupon, Steps SC1 and SC2 shown in Fig. 10 compose a sulfur over-absorption judging member (means) 40a for judging whether it is the SOx over-absorbed state in which the quantity of SOx absorbed by the catalyst 25 is larger than or equal to the predetermined value. Further, Step SC11 composes a sulfur releasing member (means) 40b for releasing SOx from barium in the catalyst 25 when the sulfur over-absorption judging member 40a has judged that SOx is excessively absorbed. Thus, the sulfur releasing member 40b causes the fuel injector 7 to divide the fuel into two parts and then to inject the two parts individually during the intake and compression strokes of the cylinder respectively, when the exhaust gas temperature thg is higher than or equal to the preset temperature thg0. In consequence, the catalyst 25 is kept in a state of higher temperature, and further the CO concentration in the exhaust gas is highly increased. Hereupon, the CO concentration is also increased by increasingly correcting the fuel injection quantity.

Moreover, Steps SC8 to SC10 compose a concentration fluctuating member (means) 40c for periodically fluctuating the CO concentration in the exhaust gas when SOx is released from barium in the catalyst 25. The concentration fluctuating member 40c periodically fluctuates the air fuel ratio in the combustion chamber 4 of each cylinder 2 by correcting the fuel injection quantity using feedback control in accordance with the signals from the $O_2$ sensor 24 so that the air fuel ratio is mutually fluctuated between a rich side and a lean side in relation to the theoretical air fuel ratio.

(EGR control)

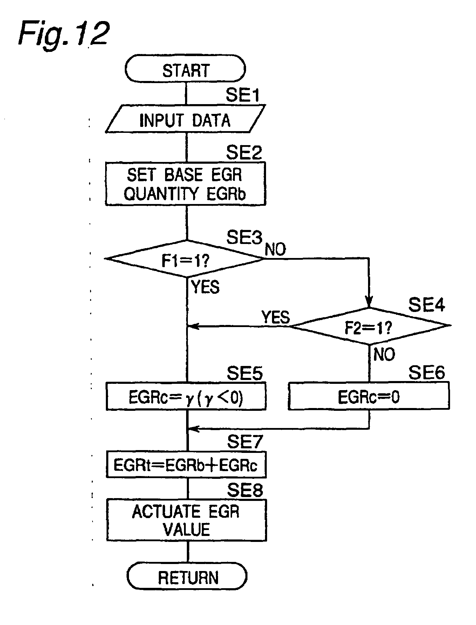

Next, the procedure of the EGR control will be concretely described in accordance with the flowchart shown in Fig. 12. At first, in Step SE1 after the control has started, to the ECU 40, there are introduced various sensor signals of the air flow sensor 12, the rotating speed sensor 33 and so on. In addition, various data in the memory is also inputted to the ECU 40. Following that, in Step SE2, the target EGR ratio is calculated in accordance with the actual charging efficiency ce and the engine speed ne. Then, the EGR quantity which can achieve the target EGR ratio, is set as the base EGR quantity EGRb. Hereupon, the relationship among the target EGR ratio, the charging efficiency ce and the engine speed ne is previously established by a bench test or the like. Thus, the relationship is stored in a memory of the ECU 40 as a map.

Following that, in the step SE3, it is judged whether the NOx release control should be performed at the present time in accordance with the value of the first flag F1. If the judgement is YES, the control process is advanced to the step SE5. On the other hand, if the judgement is NO, the control process is advanced to the step SE4. In the step SE4, it is judged whether the SOx release control should be performed at the present time in accordance with the value of the second flag F2 this time. If the judgement is YES, the control process is advanced to the step SE5 so that the correction value EGRc for increasingly correcting the EGR quantity is set to a predetermined value $\gamma$ ($\gamma$<0) in the step.

On the other hand, if the judgement is NO, the control process is advanced to Step SE6 so that the correction value EGRc is set to zero in the step (EGRc=0) . Thus, following Step SE5 or SE6, in Step SE7, the final EGR quantity EGRt is calculated by adding the correction value EGRc to the base EGR quantity EGRb. Then, in Step SE8 following that, control signals are output to the EGR valve 27. Thus, the EGR valve 27 is actuated so that its openness coincides with that corresponding to the final EGR quantity EGRt. Then, the control process is returned.

That is, as described above, by performing at least one of the NOx release control and the SOx release control, and by controlling the fuel injection quantity of the injector 7 by means of the feedback control, the openness of the EGR valve 27 is corrected so that the EGR quantity becomes a little smaller when the air fuel ratio in the combustion chamber 4 is held near the theoretical air fuel ratio.

(Functions and effects)

Hereinafter, the functions and effects of the first embodiment will be described.

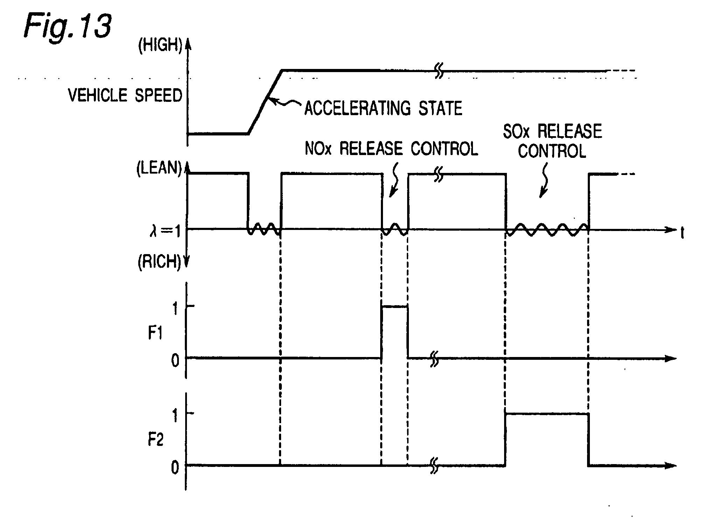

For example, as shown in Fig. 13, the engine 1 works with the λ=1 division mode or enrich mode by increasing the fuel injection quantity when the engine is accelerated. On the occasion, NOx which has been absorbed by the catalyst 25, is released, and then reduced and purified. After that, if the engine 1 continues to work in a steady state for some time, it is judged whether NOx is excessively absorbed by the catalyst 25 (the first flag F1 is 1 or not) in accordance with the travel distance after the last release of NOx and the fuel consumption during the traveling period. Thus, the NOx release control as shown in the flowchart in Fig. 9 is performed.

That is, because the injector 7 divides the fuel into two parts and individually injects the both parts, at first the part which is injected in the intake stroke of each cylinder 2, uniformly diffuses in the combustion chamber 4 so as to form a lean air fuel mixture. On the other hand, the part which is injected in the compression stroke forms an excessively rich air fuel mixture near the ignition plug 6. Hereupon, although the initial combustion rate just after the ignition is fast in the region of the excessively rich air fuel mixture, there is formed such a state which tends to produce CO due to local incomplete combustion because of lack of oxygen. Meanwhile, the combustion rate is slow in the region of the lean air fuel mixture around the rich region. Thus, because a part of the fuel is discharged before it has been completely burnt, the temperature of the exhaust gas rises due to after burning and CO is easily produced more and more. Moreover, because the frequency of opening of the injector 7 increases due to the division of the fuel injection, the ratio of liquid fuel drops with larger size increases in the earlier stage of the fuel injection, thereby also CO is easily produced.

Further, because the fuel injection quantity of the injector 7 is increased and the air fuel ratio in the combustion chamber 4 is controlled to nearly coincide with the theoretical air fuel ratio, the concentrations of reducers such as CO and HC in the exhaust gas are increased. In addition, because the fuel injection quantity is corrected by the feedback control in accordance with the signals from the $O_2$ sensor 24, the air fuel ratio is periodically fluctuated so as to change mutually between the rich side and the lean side. Therefore, the concentration of each of CO, HC, $O_2$ and so on in the exhaust gas is periodically fluctuated also. In consequence, the influence of each of CO, HC, $O_2$ and so on for NOx adsorbed by the catalyst 25 is intensified so that the release of NOx from the catalyst 25 is promoted.

More concretely, it may be considered that the following phenomena occur. That is, in the catalyst 25, NOx is adsorbed on the surfaces of the barium particles in the form of' nitrate. Thus, barium nitrate $Ba(NO_3)_2$ is substituted by feeding of CO so that barium carbonate $BaCO_3$ and nitrogen dioxide $NO_2$ are produced.

$$Ba(NO_3)_2 + CO \rightarrow BaCO_3 + NO_2\uparrow \text{ (coefficients omitted)}$$

Thus, on the catalytic metal, nitrogen dioxide $NO_2$ is reacted with HC, CO and so on to be reduced and purified.

$$NO_2 + HC + CO \rightarrow N_2 + H_2O + CO_2 \text{ (coefficients omitted)}$$

That is, because NOx is released from the catalyst 25 to be reduced and purified, the catalyst 25 becomes such a state that it can sufficiently absorb NOx in the exhaust gas again (revival of the catalyst).

Hereupon, the catalyst 25 of two layer coating type is provided with an inner catalytic layer 25b for absorbing or releasing NOx mainly and an outer catalytic layer 25c by which zeolite is supported, the outer catalytic layer 25c being formed on the inner catalytic layer 25b. Thus, because CO and HC in the exhaust gas are adsorbed and held by the zeolite, the released NOx may be surely reduced and purified. That is, even if the quantity of NOx released from the catalyst 25 becomes less, CO and HC can be reacted with NOx without discharging CO and HC into the atmosphere. Therefore, NOx absorbed by the catalyst 25 can be almost wholly released so that the catalyst 25 can be sufficiently revived.

Further, because platinum (Pt) and rhodium (Rh) are supported in the outer catalytic layer 25c, $NO_2$ can be effectively reduced and decomposed even if the temperature is comparatively lower (for example, 200 to 250 °C). Thus, because the air fuel ratio becomes extremely leaner in the stratiform combustion condition in the engine 1 which works in the stratiform combustion condition as the present embodiment, the temperature of the exhaust gas becomes considerably lower. Therefore, the feature that $NO_2$ can be effectively reduced and decomposed in a relatively lower temperature due to the function of the catalytic metal, is particularly effective.

Further, according to the present embodiment, the catalyst 25 is prevented from decreasing its NOx removal efficiency due to the sulfur poisoning.

Concretely, for example, if the engine 1 is mounted on a vehicle and the travel distance of the vehicle comes up to several thousand kilometers, it may be feared that SOx is gradually accumulated in the catalyst 25 when the engine 1 is working so that the NOx absorption efficiency is lowered. Therefore, as shown in the flowchart in Fig. 10, if the sulfur over-absorption judging member has judged that SOx is excessively absorbed when the engine 1 is working and the second flag F2 is set to ON (see Fig. 13), the SOx release control as same as the NOx release control, namely the twofold divisional fuel injection and the feedback control of the air fuel ratio near the theoretical air fuel ratio are performed when the temperature of the catalyst 25 is higher (for example, higher than or equal to 450 °C). In consequence, the CO concentration or HC concentration in the exhaust gas is highly increased and periodically fluctuated so that the release of SOx from the catalyst 25 is promoted.

More concretely, it may be considered that SOx is adsorbed on the surfaces of the barium particles in the catalyst25, in the form of sulfate, as same as the case of NOx. Further, it may be considered that barium sulfate $BaSO_4$ is substituted by feeding of CO so that barium carbonate $BaCO_3$ and sulfur dioxide $SO_2$ are produced.

$$BaSO_4 + CO \rightarrow BaCO_3 + SO_2 \uparrow \text{ (coefficients omitted)}$$

Further, if the CO concentration is larger, CO and water $H_2O$ in the exhaust gas cause so-called water gas shift reaction so that hydrogen $H_2$ is produced at the reactive sites of the catalyst 25.

$$CO + H_2O \rightarrow H_2 + CO_2$$

Then, because SOx is released in the form of hydrogen sulfide $H_2S$ by hydrogen $H_2$ described above, the release of sulfur component from the catalyst 25 is promoted thereby. Because the water gas shift reaction progresses even at comparatively lower temperature, the release of SOx may be promoted even without raising the temperature of the catalyst 25 so much.

Further, because zeolite is supported in the outer catalytic layer 25c of the catalyst 25 so that HC in the exhaust gas is partially oxidized by the zeolite to change to HCO and CO, the concentration of CO which acts on SOx adsorbed on the surfaces of the barium particles in the inner catalytic layer 25b, may increase much more.

In short, according to the present embodiment, the CO concentration in the exhaust gas is increased by means of the divisional fuel injection and so on, and further CO which acts on the surfaces of the barium particles acting as the NOx absorber, is also increased by means of the construction itself of the catalyst 25. In consequence, SOx may be released from the catalyst 25 without raising the temperature of the catalyst 25 to excess. Moreover, because the air fuel ratio in the combustion chamber 4 is periodically fluctuated to the rich side and to the lean side in relation to the theoretical air fuel ratio, the partial pressure of CO around the catalyst 25 is fluctuated so that the action of CO may be intensified. In consequence, the release of SOx may be promoted much more. In addition, because the control of the air fuel ratio is performed in accordance with the signals from the lambda $O_2$ sensor 24, the accuracy of the control may become higher extremely.

In consequence, the time required for sufficiently releasing SOx from the catalyst 25, namely the time for controlling the air fuel ratio so as to nearly coincides with the theoretical air fuel ratio for the SOx releasing purpose, is shortened. Therefore, the catalyst 25 may be sufficiently revived so that the NOx removal efficiency may be stably secured, while restraining the deterioration of the fuel consumption to minimum.

(The second embodiment)

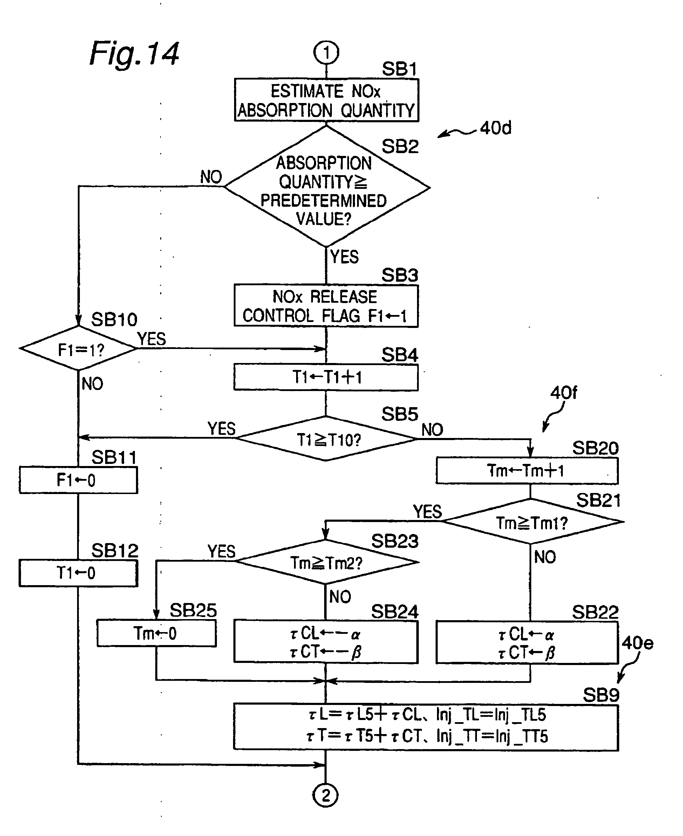

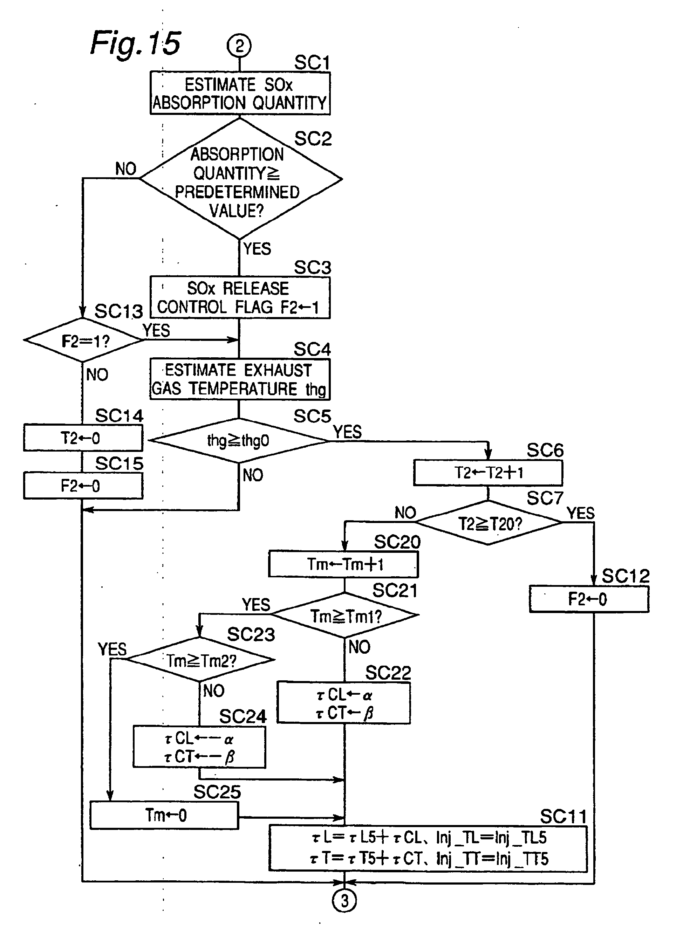

In Figs. 14 and 15, there are shown procedures of the NOx release control and the SOx release control in an exhaust gas purifying apparatus of an engine according to the second embodiment of the present invention, respectively. Because the general construction of the exhaust gas purifying apparatus is as same as that of the first embodiment, the elements common to those of the first embodiment is denoted by the same numerals or symbols as those of the first embodiment, and then the descriptions about those are omitted. Thus, in the exhaust gas purifying apparatus according to the second embodiment, the fuel is divided into two parts and then the parts are injected in the intake and compression strokes respectively as same as the case of the first embodiment when the release of NOx or SOx is promoted. Meanwhile, the feedback correction based on the signals from the $O_2$ sensor 24 is not performed. Instead of that, there is performed so-called dither control which periodically fluctuates the target value itself of the fuel injection.

Concretely, at first, in Steps SB1 to SB5 of the flowchart shown in Fig. 14, there are performed operations as same as those of the first embodiment. Thus, if it is judged that the first timer count T1 is larger than or equal to the preset threshold value T10 in Step SB5 (YES), it is considered that the period for performing the NOx release control has passed, so that the control process is advanced to Step SB11. If the judgement is NO, the control process is advanced to Step SB20. Then, in Steps SB20 to SB25, the calculation for the dither control is performed.

That is, in Step SB20, the dither timer count Tm for counting the fluctuation period of the fuel injection quantity is incremented (Tm=Tm+1), the initial value of Tm being set to 0. Following that, in Step SB21, the dither timer count Tm is compared with the threshold value Tm1 which has been set so as to correspond to a half of the fluctuation period. Hereupon, if Tm is smaller than Tm1 (Tm<Tm1), namely the judgement in Step SB21 is NO, the control process is advanced to Step SB22 so that the correction values $\tau$ CL and $\tau$ CT for the fuel injection quantity are set to constant values $\alpha$ and $\beta$, respectively.

Meanwhile, in Step SB23 to which the control process is advanced when the judgement in Step SB21 is YES (Tm $\geqq$ Tm1), the dither timer count Tm is compared with the threshold value Tm2 which has been set so as to correspond to the fluctuation period. Hereupon, if Tm is smaller than Tm2 (Tm<Tm2), namely the judgement in Step SB23 is NO, the control process is advanced to Step SB24 so that the correction values $\tau$ CL and $\tau$ CT for the fuel injection quantity are set to constant values - $\alpha$ and - $\beta$ respectively. On the other hand, if it is judged that Tm is larger than or equal to Tm2 (Tm$\geqq$Tm2) in Step SB23 (YES), the control process is advanced to Step SB25 so that the dither timer count Tm is reset (Tm=0).

Following Step SB22, SB24 or SB25, in Step SB9, the injection pulse widths $\tau$ L and $\tau$ T of the intake stroke and compression stroke are calculated and set, respectively, as same as the case of the first embodiment. Further, their injection timings are newly set.

$$\tau L = \tau L5 + \tau CL, \qquad Inj\_TL = Inj\_TL5$$

$$\tau T = \tau T5 + \tau CT, \qquad Inj\_TT = Inj\_TT5$$

Hereupon, the values $\tau$ L5 and $\tau$ T5 are set in accordance with the actual charging efficiency ce so that the air fuel ratio coincides with a predetermined value which has been set within the air fuel ratio range of 15 to 16 (A/F=15-16).

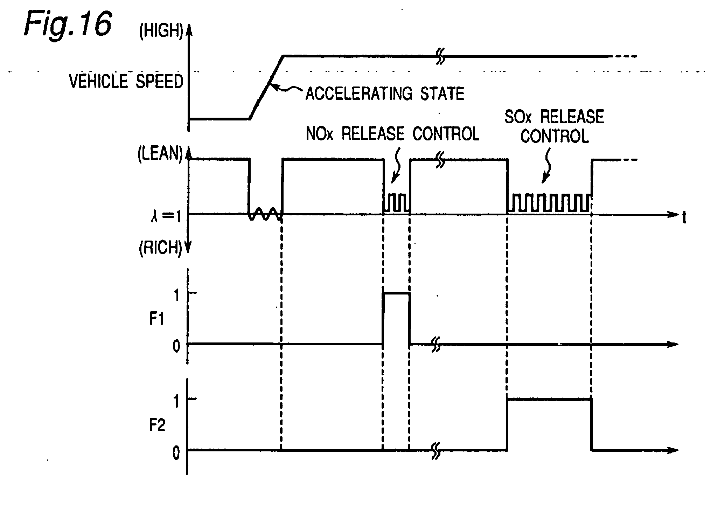

That is, after the NOx release control has started, at every time the dither timer count Tm is changed by Tm1, the fuel injection quantity of the fuel injector 7 during the intake stroke is mutually changed to $\tau$ L5+$\alpha$ and to $\tau$ L5-$\alpha$, and further the fuel injection quantity during the compression stroke is mutually changed to $\tau$ T5+$\beta$ and to $\tau$ T5-$\beta$ also. In consequence, the air fuel ratio in the combustion chamber 4 may periodically fluctuates within the air fuel ratio range of 15 to 16 (A/F=15-16), as shown in Fig. 16

Meanwhile, as same as the case of the NOx release control shown in Fig. 14, in Steps SC1 to SC7 of the SOx release control shown in Fig. 15 also, there are performed operations as same as those of the first embodiment. Thus, if it is judged that the second timer count T2 is larger than or equal to the preset threshold value T20 in Step SC7 (YES), it is considered that the period for performing the SOx release control has passed, so that the control process is advanced to Step SC12. If the judgement is NO, the control process is advanced to Step SC20. Then, in Steps SC20 to SC25, the calculation for the dither control is performed. Because the concrete procedure of the dither control calculation is as same as that in Steps SB20 to SB25 shown in Fig. 14, the description about those are omitted.

Hereupon, Steps SB1 and SB2 shown in Fig. 14 compose a NOx over-absorption judging member (means) 40d for judging whether it is the NOx over-absorbed state in which the quantity of NOx absorbed by the catalyst 25 is larger than or equal to the predetermined value. Further, Step SB9 composes an oxygen decreasing member (means) 40e for decreasing the oxygen concentration in the exhaust gas when the NOx over-absorption judging member 40d has judged that NOx is excessively absorbed. Thus, the oxygen decreasing member 40e decreases the oxygen concentration in the exhaust gas by increasingly correcting the fuel injection quantity so as to change the air fuel ratio in the combustion chamber 4.

Moreover, Steps SB20 to SB25 compose a concentration fluctuating member (means) 40f for periodically fluctuating the CO concentration and HC concentration in the exhaust gas when the oxygen concentration in the exhaust gas is decreased by the oxygen decreasing member 40e. The concentration fluctuating member 40f forcibly increases and decreases the injection pulse widths $\tau$ of the injector 7 by means of the dither control.

Moreover, in the second embodiment, when the EGR control similar to that of the first embodiment is performed, the correction value EGRc for correcting the EGR quantity is set to a positive value $\gamma$ ($\gamma$>0) in Step SE5 of the flowchart shown in Fig. 12. That is, in the second embodiment, when at least one of the NOx release control and the SOx release control is performed, the EGR quantity is increasingly corrected in opposition to the case of the first embodiment. In consequence, even if the air fuel ratio in the combustion chamber 4 is controlled so as to be in the range of 15 to 16 (A/F=15-16) by means of the dither control, it is prevented that the quantity of NOx produced due to the combustion increases.

Therefore, according to the second embodiment, for example as shown in Fig. 16, when the engine 1 is being accelerated, it works with the λ=1 division mode or enrich mode as same as the case of the first embodiment. On the occasion, NOx absorbed by the catalyst 25 may be released, and then reduced to be purified. After that, if the engine 1 continues to work in a steady state for some time and then it is judged that NOx is excessively absorbed by the catalyst 25 (the flag F1=1), the NOx release control as shown in the flowchart in Fig. 14, is performed. That is, because the injector 7 divides the fuel into two parts and then individually injects the both parts, the CO concentration in the exhaust gas is highly increased as same as the case of the first embodiment. Meanwhile, although the fuel injection quantity of the injector 7 is increased, the air fuel ratio in the combustion chamber 4 is controlled so as to be a little leaner (A/F=15-16) than the theoretical air fuel ratio, and further the air fuel ratio is periodically fluctuated by means of the dither control of the fuel injection quantity.

Thus, the fuel injection quantity is increasingly corrected as described above. Further, the concentrations of CO and HC, each of which acts as a reducer, are increased by lowering the oxygen concentration in the exhaust gas. Moreover, the concentrations of CO, HC, $O_2$ and so on are periodically fluctuated. In consequence, the release of NOx from the catalyst 25 is promoted so that the catalyst 25 may be sufficiently revived, although the functions or effects are a little less in comparison with the case of the first embodiment. Particularly, the catalyst 25 in the present embodiment is provided with an inner catalytic layer 25b for mainly absorbing and releasing NOx, and an outer catalytic layer 25c supporting zeolite, which is formed on the inner catalytic layer 25b. Thus, because CO and HC in the exhaust gas are adsorbed and held by the zeolite, they can act on the inner catalytic layer 25b. In consequence, the release of NOx and the purification of NOx by reduction may be sufficiently promoted.

Further, because the air fuel ratio in the combustion chamber 4 is controlled so as to be a little leaner than the theoretical air fuel ratio, the fuel consumption may be decreased in correspondence with the above. That is, according to the second embodiment, the catalyst 25 may be sufficiently revived as same as the case of the first embodiment. Therefore, the deterioration of the fuel consumption due to the revival of the catalyst 25 may be further decreased, while stably securing the NOx removal efficiency.

(Examples)

Hereinafter, concrete examples (test results), which were obtained by performing tests, will be described.

The catalyst of lean NOx type used for the tests was one of two layer coating type as same as that of each of the embodiments described above. The inner catalytic layer of the catalyst included alumina and ceria as supporting materials, by which platinum (Pt) and barium (Ba) were supported. Meanwhile, the outer catalytic layer included zeolite as a supporting material, by which platinum (Pt), rhodium (Rh) and barium (Ba) were supported. Thus, the catalyst was disposed in the exhaust passage of a cylinder injection type gasoline engine whose displacement cubic capacity was 2000 cc. The engine was operated such a manner that the lean condition A and the lean condition B were mutually exchanged at every period of three minutes. Hereupon, in the lean condition A, the oxygen concentration in the exhaust gas was about 7% (air fuel ratio A/F= ca 22). On the other hand, in the lean condition B, the oxygen concentration in the exhaust gas was about 0.5% to about 1% (air fuel ratio A/F= ca 15-16). Then, the NOx removal ratio was calculated by integrating the values of NOx concentration at downstream of the catalyst, for a predetermined period after the operating condition had been changed. Hereupon, the composition except oxygen of the exhaust gas was as follows.

HC : 4000ppmC (propylene $C_3H_6$ was used)
NO : 260ppm
$H_2$ : 650ppm
CO: 0.16%
$N_2$ : balance (remainder)

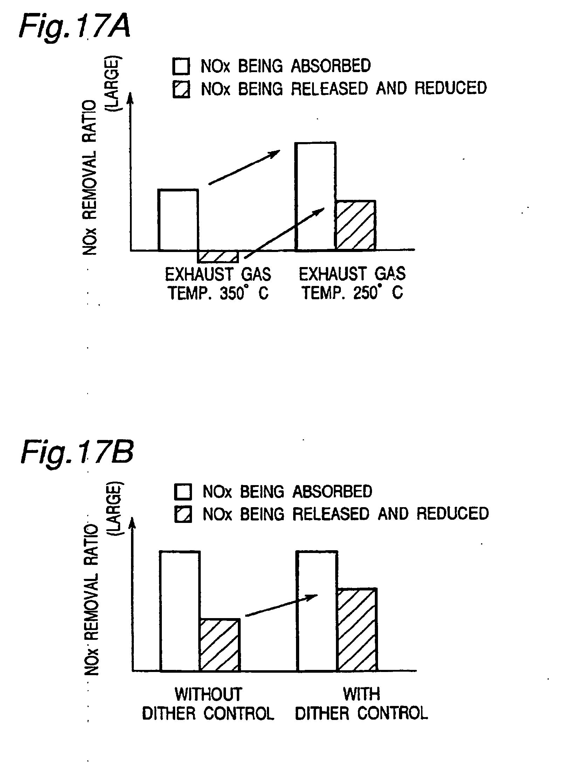

Fig. 17A shows the result of a test which was performed under such condition that the temperature of the catalyst at its inlet portion was set to 350°C or 250°C by changing the temperature of the exhaust gas. As shown at the left portion in Fig. 17A, when the temperature of the exhaust gas is higher, the NOx removal ratio under the state that NOx is released and reduced has a negative (minus) value, the state corresponding to the lean condition B. It means that NOx released from the catalyst is not sufficiently reduced so that it is discharged into the atmosphere. Further, NOx cannot be sufficiently released from the catalyst in this case. In consequence, the NOx removal ratio under the state that NOx is absorbed, may not become so much, the state corresponding to the lean condition A.

On the contrary, as shown at the right portion in Fig. 17A, when the temperature of the exhaust gas is lower, the NOx removal ratio is highly improved because the activity of the catalytic metal becomes larger. In correspondence with the above, the NOx removal ratio under the state that NOx is absorbed sufficiently, may become higher. That is, in the engine working under the stratiform combustion condition such as one according to the embodiments described above, the temperature of the exhaust gas becomes lower considerably in comparison with the conventional case. Therefore, it may be understood that the temperature of the catalyst is also shifted to the lower temperature side so that the NOx removal efficiency is entirely raised.

Further, Fig. 17B shows how the NOx removal efficiency is improved by periodically fluctuating the air fuel ratio in the combustion chamber under the lean condition B by means of the dither control, when the temperature of the catalyst at its inlet portion is 250°C. That is, the left portion in Fig. 17B shows the NOx removal ratio when the air fuel ratio in the combustion chamber is controlled under the lean condition B so as to become a constant value in the range of 15 to 16 by A/F (namely, the NOx removal ratio shown at the right portion in Fig. 17A). On the other hand, the right portion in Fig. 17B shows the NOx removal ratio when the air fuel ratio in the combustion chamber is periodically fluctuated by means of the dither control. According to Fig. 17B, it may be understood that the NOx removal ratio under the lean condition B is improved by the dither control.

Hereupon, the present invention is not restricted to the above-mentioned embodiments, and consequently it also includes other various embodiments. That is, in the second embodiment, the oxygen concentration in the exhaust gas is lowered by the oxygen decreasing member by increasingly correcting the fuel injection quantity of the fuel injector 7 to change the air fuel ratio in the combustion chamber 4. However, in stead of the above, for example, the oxygen concentration in the exhaust gas may be lowered or the concentrations of HC, CO and so on may be fluctuated, by injecting the fuel during the exhaust stroke of each cylinder. Meanwhile, the concentrations of HC, CO, $O_2$ and so on may be lowered or fluctuated as the case of each embodiment described above, by disposing a member for directly feeding HC, CO, $O_2$ and so on into the exhaust passage.

Meanwhile, in each of the embodiments described above, the lambda $O_2$ sensor 24 is used as the oxygen concentration detector. However, instead of that, there may be used a so-called linear $O_2$ sensor which can obtain a linear output corresponding to the oxygen concentration when the oxygen concentration in the exhaust gas is within a predetermined range including the theoretical air fuel ratio therein.

Moreover, in each of the embodiments described above, the injector 7 divides the fuel into two parts and then individually injects the two parts during the intake and compression strokes at every cylinder, respectively. However, instead of that, the two parts may be injected only during the intake stroke. Further, the fuel may be divided into three parts or the more parts.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims.

**Claims**

1. An exhaust gas purifying apparatus of an engine, which comprises:

   a NOx absorber (25) which absorbs NOx in an exhaust gas under an over-oxygen atmosphere in which an oxygen concentration in the exhaust gas is high while releasing the absorbed NOx when the oxygen concentration is decreased, and further absorbs a sulfur component in the exhaust gas, the NOx absorber (25) being disposed in an exhaust passage (22) into which the exhaust gas is discharged from an combustion chamber (4) of the engine (1);
   an over-absorption judging member (a) for judging whether the sulfur component is excessively absorbed by the NOx absorber (25);
   an oxygen concentration detector (24) for detecting the oxygen concentration in the exhaust gas;
   an air fuel ratio controller (40) for controlling an air fuel ratio; and
   a releasing member (b,c) for releasing the sulfur component from the NOx absorber (25) by means of adding a reducer
   **characterized in that**
   the releasing member (b, c) controls a quantity of fuel injection by feed forward control so that the air fuel ratio A/F in the combustion chamber (4) is mutually fluctuated between 15 and 16, when the over-absorption judging member (a) has judged that the sulfur component is excessively absorbed.

2. The exhaust gas purifying apparatus according to claim 1, wherein the releasing member (b,c) keeps the NOx absorber (25) at a temperature higher than or equal to a predetermined temperature.

3. The exhaust gas purifying apparatus according to claim 1, wherein the releasing member (b,c) keeps the atmosphere at least around the NOx absorber (25) in such a condition that the reducer concentration in the exhaust gas is high.

4. The exhaust gas purifying apparatus according to claim 1, further comprising a fuel injector (7) for directly injecting a fuel into the combustion chamber (4) in a cylinder (2) of the engine (1), wherein the releasing member (b,c) causes the fuel injector (7) to divide the fuel into at least two parts so as to inject the parts by turns during a period from an intake stroke to a compression stroke of the cylinder (2), when the sulfur component is released from the NOx absorber (25).

5. The exhaust gas purifying apparatus according to claim 4, wherein the releasing member (b,c) increasingly corrects a fuel injection quantity of the fuel injector (7) when the sulfur component is released from the NOx absorber (25).

6. The exhaust gas purifying apparatus according to claim 1, wherein a quantity of EGR is increasingly corrected when the sulfur component is released.


**Patentansprüche**

1. Vorrichtung zur Abgasreinigung eines Motors, umfassend
   einen NOx-Absorber (25), der NOx in einem Abgas unter einer Atmosphäre mit Sauerstoffüberschuss absorbiert, bei der eine Sauerstoffkonzentration in dem Abgas hoch ist, während er das absorbierte NOx abgibt, wenn die Sauerstoffkonzentration geringer ist, und der außerdem eine Schwefelkomponente in dem Abgas absorbiert, wobei der NOx-Absorber (25) in einem Auspuff-Durchlass (22) angeordnet ist, in den das Abgas von einem Brennraum (4) des Motors (1) ausgelassen wird;
   ein Element zur Feststellung einer Überabsorption (a) zum Feststellen, ob die Schwefelkomponente übermäßig von dem NOx-Absorber (25) absorbiert wird;
   einen Sauerstoffkonzentrationsdetektor (24) zum Erkennen der Sauerstoffkonzentration in dem Abgas;
   eine Steuereinheit für das Luft/Kraftstoff-Verhältnis (40) zum Steuern eines Luft/Kraftstoff-Verhältnisses; und
   ein Abgabeelement (b, c) zum Abgeben der Schwefelkomponente aus dem NOx-Absorber (25) mittels des Hinzufügens eines Reduktionsmittels,
   **dadurch gekennzeichnet, dass**
   das Abgabeelement (b, c) eine Kraftstoffeinspritzmenge durch Vorwärtskopplung so steuert, dass das Luft/Kraftstoff-Verhältnis A/F in dem Brennraum (4) zwischen 15 und 16 wechselnd schwankt, wenn das Element zur Feststellung einer Überabsorption (a) festgestellt hat, dass die Schwefelkomponente übermäßig absorbiert wird.

2. Vorrichtung zur Abgasreinigung nach Anspruch 1, wobei das Abgabeelement (b, c) den NOx-Absorber (25) bei einer Temperatur hält, die höher als oder gleich einer vorbestimmten Temperatur ist.

3. Vorrichtung zur Abgasreinigung nach Anspruch 1, wobei das Abgabeelement (b, c) die Atmosphäre zumindest um den NOx-Absorber (25) herum in einem solchen Zustand hält, dass die Konzentration des Reduktionsmittels in dem Abgas hoch ist.

4. Vorrichtung zur Abgasreinigung nach Anspruch 1, ferner umfassend eine Kraftstoffeinspritzvorrichtung (7) zum direkten Einspritzen eines Kraftstoffs in den Brennraum (4) in einem Zylinder (2) des Motors (1), wobei das Abgabeelement (b, c) die Kraftstoffeinspritzvorrichtung (7) veranlasst, den Kraftstoff in zumindest zwei Teile aufzuteilen, um die Teile während eines Zeitraums von einem Ansaugtakt zu einem Verdichtungstakt des Zylinders (2) abwechselnd einzuspritzen, wenn die Schwefelkomponente von dem NOx-Absorber (25) abgegeben wird.

5. Vorrichtung zur Abgasreinigung nach Anspruch 4, wobei das Abgabeelement (b, c) zunehmend eine Kraftstoffeinspritzmenge der Kraftstoffeinspritzvorrichtung (7) korrigiert, wenn die Schwefelkomponente von dem NOx-Absorber (25) abgegeben wird.

6. Vorrichtung zur Abgasreinigung nach Anspruch 1, wobei eine AGR-Menge zunehmend korrigiert wird, wenn die Schwefelkomponente abgegeben wird.

**Revendications**

1. Dispositif de purification des gaz d'échappement d'un moteur, comprenant
un absorbeur de NOx (25) qui absorbe du NOx dans un gaz d'échappement sous une atmosphère avec un excédent d'oxygène excessif dans laquelle une concentration d'oxygène dans les gaz d'échappement est élevée, tandis qu'il relâche le NOx absorbé lorsque la concentration d'oxygène est réduite, et qui en plus absorbe un composant soufré dans les gaz d'échappement, l'absorbeur de NOx (25) étant situé dans un passage d'échappement (22) dans lequel les gaz d'échappement provenant d'une chambre de combustion (4) du moteur (1) sont déchargés;
un élément estimateur d'une absorption excessive (a) destiné à estimer si le composant soufré est absorbé de manière excessive par l'absorbeur de NOx (25);
un détecteur de concentration d'oxygène (24) destiné à détecter la concentration d'oxygène dans les gaz d'échappement;
une commande pour le rapport air/carburant (40) destiné à commander un rapport air/carburant; et
un élément de dégagement (b, c) destiné à dégager le composant soufré de l'absorbeur de NOx (25) par l'intermédiaire d'un ajout d'un réducteur,
**caractérisé en ce que**
l'élément de dégagement (b, c) commande, par l'intermédiaire d'une commande prédictive, une quantité d'injection de carburant de manière que le rapport air/carburant A/F dans la chambre de combustion (4) varie mutuellement entre 15 et 16 lorsque l'élément estimateur d'une absorption excessive (a) a estimé que le composant soufré est absorbé de manière excessive.

2. Dispositif de purification des gaz d'échappement selon la revendication 1, **caractérisé en ce que** l'élément de dégagement (b, c) maintient l'absorbeur de NOx (25) à une température qui est plus élevée qu'une température prédéterminée ou qui est égale à celle-ci.

3. Dispositif de purification des gaz d'échappement selon la revendication 1, **caractérisé en ce que** l'élément de dégagement (b, c) maintient l'atmosphère au moins autour de l'absorbeur de NOx (25) dans une telle condition que la concentration du réducteur dans les gaz d'échappement soit élevée.

4. Dispositif de purification des gaz d'échappement selon la revendication 1, comprenant en plus un injecteur de carburant (7) destiné à l'injection directe d'un carburant dans la chambre de combustion (4) d'un cylindre (2) du moteur (1), l'élément de dégagement (b, c) causant l'injecteur de carburant (7) à partager le carburant en au moins deux portions afin d'injecter les portions à tour de rôle pendant une période entre une course d'aspiration et une course de compression dudit cylindre (2) lorsque le composant soufré est dégagé de l'absorbeur de NOx (25).

5. Dispositif de purification des gaz d'échappement selon la revendication 4, **caractérisé en ce que** l'élément de dégagement (b, c) corrige de plus en plus une quantité d'injection de carburant provenant de l'injecteur de carburant (7) lorsque le composant soufré est dégagé de l'absorbeur de NOx (25).

6. Dispositif de purification des gaz d'échappement selon la revendication 1, **caractérisé en ce qu'**une quantité de recirculation des gaz d'échappement est de plus en plus corrigée lorsque le composant soufré est dégagé.

# Fig.1

```
┌─────────────────┐              ┌─────────────────┐
│  SULFUR OVER-   │              │     SULFUR      │
│   ABSORPTION    │- - - -●- - - →│   RELEASING     │
│ JUDGING MEMBER  │              │     MEMBER       │
└─────────────────┘              └─────────────────┘
        ╲                  ╲              ╲
         a                  │              b
         ┊          ┌──────────────┐      ┊
         ┊          │CONCENTRATION │      ┊
         ┊          │  FLUCTUATING │      ┊
         ┊          │    MEMBER    │      ┊
         ┊          └──────────────┘      ┊
         ┊                  ╲             ┊
         ┊                   c            ┊
         ┊                   ┊            ┊
    ┌──────────────┐         ┊            ┊
    │              │         ┊            ┊
 1 ─┤   ENGINE     │  22     ▼            ▼
    │              ├────╮  ╭──╮  ╭─╮
    └──────────────┘    ╰──╯  │  │ │~25
                               ╰─╯
```

*Fig.2*

| INTAKE AIR TEMPERATURE SENSOR | 31 |
| ATMOSPHERIC PRESSURE SENSOR | 32 |

40

ECU

| ROTATING SPEED SENSOR | 33 |
| ACCEL OPENNESS SENSOR | 34 |

A

11  15  10  17  20  5  22  24
12  16  13  18  19  6  23  25
14  7  9  3  4  30
27  8  2
28  1
26

EP 1 026 374 B1

## Fig.3

## Fig.4

## Fig.5

## Fig.6

*Fig.7A*

ACCEL (LARGE)

LARGE trq

ne (HIGH)

*Fig.7B*

TARGET ce (LARGE)

LARGE tvo

ne (HIGH)

# Fig.8

```
                                          ┌──────────┐
                                          │  START   │
                                          └────┬─────┘
                                               │           SA1
                                          ╱────┴──────────╲
                                         ╱   INPUT DATA    ╲
                                         ╲─────────────────╱
                                               │           SA2
                                       ┌────────┴──────────┐
                                       │   SET BASE FUEL   │
                                       │ INJECTION QUANTITY│
                                       └────────┬──────────┘
                                               │
                            NO            ╱────┴─────╲    SA3
               ┌───────────────────────◁    λ=1      ▷
               │                         ╲ DIVISION MODE? ╱
               │                          ╲────┬─────╱
               │            ╱────╲              │ YES
               │          ╱ SA6    ╲            │              SA4
      NO      ╱  STRATIFORM  ╲      │   ┌───────┴──────────┐
   ┌────────◁   COMBUSTION    ▷     │   │  τL=τL1, τT=τT1   │
   │          ╲   MODE?      ╱      │   └───────┬──────────┘
   │           ╲────┬───╱           │                        SA5
   │   ╱────╲        │ YES          │   ┌───────┴──────────┐
YES│  ╱ SA9  ╲       │              │   │  Inj_TL=Inj_TL1  │
   ▽ FUEL CUT? ▷     │       SA7     │   │  Inj_TT=Inj_TT1  │
   │  ╲      ╱   ┌───┴──────────┐   │   └───────┬──────────┘
┌──┴───┐ ╲──╱    │ τL=0, τT=τT2 │   │           │
│RETURN│   │NO   └───┬──────────┘   │           │
└──────┘   │ SA10            SA8    │           │
   ┌───────┴──────┐ ┌───┴──────────┐│           │
   │ τL=τL3, τT=0 │ │ Inj_TT=Inj_TT2││           │
   └───────┬──────┘ └───┬──────────┘│           │
           │ SA11       │           │           │
   ┌───────┴──────┐     │           │           │
   │Inj_TL=Inj_TL3│     │           │           │
   └───────┬──────┘     │           │           │
           └────────────┴───────────┴───────────┤
                                                 ▼
                                               ( 1 )
```

*Fig.9*

① SB1

ESTIMATE NOx
ABSORPTION QUANTITY

SB2

ABSORPTION
QUANTITY≧
PREDETERMINED
VALUE?

NO ──────────────

YES

SB3

NOx RELEASE
CONTROL FLAG F1←1

SB10

F1=1? ──YES──→ SB4

NO

$T1←T1+1$

SB5

YES ←────── $T1≧T10?$

SB11

$F1←0$

NO

SB6

$E≧E1?$ ──NO──

YES

SB12

$T1←0$

SB7

$\tau CL←\tau CL-\alpha$
$\tau CT←\tau CT-\beta$

SB8

$\tau CL←\tau CL+\alpha$
$\tau CT←\tau CT+\beta$

SB9

$\tau L=\tau L4+\tau CL、 Inj\_TL=Inj\_TL4$
$\tau T=\tau T4+\tau CT、 Inj\_TT=Inj\_TT4$

②

*Fig.10*

② SC1

ESTIMATE SOx
ABSORPTION QUANTITY

40a

SC2

ABSORPTION
QUANTITY≧
PREDETERMINED
VALUE?

NO ←

YES

SC3

SOx RELEASE
CONTROL FLAG F2←1

SC13

F2=1? — YES →

NO

SC4

ESTIMATE EXHAUST
GAS TEMPERATURE thg

SC5

thg≧thg0 — YES

NO

SC6

T2←T2+1

SC7

T2≧T20? — YES

40c

NO

SC8

E≧E1? — NO

SC14

T2←0

SC15

F2←0

SC12

F2←0

YES

SC9

$\tau CL \leftarrow \tau CL - \alpha$
$\tau CT \leftarrow \tau CT - \beta$

SC10

$\tau CL \leftarrow \tau CL + \alpha$
$\tau CT \leftarrow \tau CT + \beta$

40b

SC11

$\tau L = \tau L4 + \tau CL,\ Inj\_TL = Inj\_TL4$
$\tau T = \tau T4 + \tau CT,\ Inj\_TT = Inj\_TT4$

③

26

## Fig.11

③

SD1 YES

τL=0?

NO

SD2

NO ← Inj_TL TIMING?

YES
SD3

INTAKE STROKE
INJECTION

SD4 YES

τT=0?

NO

SD5

NO ← Inj_TT TIMING?

YES
SD6

COMPRESSION
STROKE INJECTION

RETURN

# Fig.12

```
        ( START )
              │  SE1
    ┌─────────────────┐
    /   INPUT  DATA   /
    └─────────────────┘
              │  SE2
    ┌─────────────────┐
    │  SET BASE EGR   │
    │  QUANTITY EGRb  │
    └─────────────────┘
              │
              │     SE3    NO
           ◇─────────◇──────────┐
           ◇  F1=1?  ◇          │
           ◇─────────◇          │
              │ YES             │
              │                 ▼
              │    YES    SE4
              ◄────────◇─────────◇
                       ◇  F2=1?  ◇
                       ◇─────────◇
                          │ NO
         SE5              │   SE6
    ┌──────────────┐  ┌──────────────┐
    │ EGRc=γ(γ<0) │  │   EGRc=0     │
    └──────────────┘  └──────────────┘
              │           │
              │◄──────────┘
              │  SE7
    ┌──────────────────┐
    │ EGRt=EGRb+EGRc   │
    └──────────────────┘
              │  SE8
    ┌──────────────────┐
    │  ACTUATE  EGR    │
    │     VALUE        │
    └──────────────────┘
              │
        ( RETURN )
```

Fig.13

## Fig.14

```
                                    ①
                                         SB1
                              ┌──────────────────┐
                              │   ESTIMATE NOx   │
                              │ABSORPTION QUANTITY│
                              └──────────────────┘
                                         │              ↙40d
                                         ▼           SB2
                                    ╱─────────╲
                                  ╱ ABSORPTION  ╲
                      NO       ╱   QUANTITY≧      ╲
                    ◄─────────  PREDETERMINED     ╲
                    │          ╲    VALUE?       ╱
                    │            ╲─────────────╱
                    │                  │YES
                    │                  │            SB3
                    │           ┌──────────────────┐
                    │           │   NOx RELEASE    │
         SB10       │           │CONTROL FLAG F1←1 │
       ╱─────╲  YES │           └──────────────────┘
      ╱ F1=1? ╲─────┼─────────────────►│           SB4
      ╲───────╱     │           ┌──────────────────┐
         │NO        │           │     T1←T1+1      │          40f
         │          │           └──────────────────┘           ↙
         │          │      YES          │         SB5    NO
         │          │ ◄───────────╱───────────╲────────────────►
         │          │             ╲  T1≧T10?  ╱                    SB20
         │          │              ╲─────────╱              ┌──────────────┐
  SB11   │          │                                       │   Tm←Tm+1    │
 ┌─────┐ │          │                                       └──────────────┘
 │ F1←0│ │          │                              YES           │      SB21
 └─────┘ │          │                     ◄──────────────╱───────────────╲
    │    │          │              SB23              ╲  Tm≧Tm1?  ╱
    │    │    YES  ╱────────────╲                     ╲─────────╱
    │    │ ◄──────  Tm≧Tm2?     ╲                         │NO
  SB12   │         ╲────────────╱                         │
 ┌─────┐ │              │NO    SB24                        │        SB22
 │ T1←0│ │   SB25  ┌──────────────┐              ┌──────────────┐
 └─────┘ │ ┌─────┐ │   τCL←−α     │              │   τCL←α      │
    │    │ │ Tm←0│ │   τCT←−β     │              │   τCT←β      │  40e
    │    │ └─────┘ └──────────────┘              └──────────────┘   ↙
    │    │    │           │                            │
    │    │    └───────────┼────────────────────────────┘
    │    │                ▼                                    SB9
    │    │    ┌─────────────────────────────────────────┐
    │    │    │ τL=τL5+τCL、 Inj_TL=Inj_TL5              │
    │    │    │ τT=τT5+τCT、 Inj_TT=Inj_TT5              │
    │    │    └─────────────────────────────────────────┘
    │    │                │
    └────┴────────────────┤
                          ▼
                         ②
```

# Fig.15

*Fig.16*

(HIGH)

VEHICLE SPEED

ACCELERATING STATE

NOx RELEASE CONTROL

SOx RELEASE CONTROL

(LEAN)

λ = 1

(RICH)

F1

1

0

F2

1

0

t

EP 1 026 374 B1

## Fig.17A

☐ NOx BEING ABSORBED
▨ NOx BEING RELEASED AND REDUCED

NOx REMOVAL RATIO (LARGE)

EXHAUST GAS TEMP. 350° C    EXHAUST GAS TEMP. 250° C

## Fig.17B

☐ NOx BEING ABSORBED
▨ NOx BEING RELEASED AND REDUCED

NOx REMOVAL RATIO (LARGE)

WITHOUT DITHER CONTROL    WITH DITHER CONTROL